(19) Europäisches Patentamt / European Patent Office / Office européen des brevets

(11) EP 2 910 985 B1

(12) EUROPEAN PATENT SPECIFICATION

(45) Date of publication and mention of the grant of the patent: **08.05.2019 Bulletin 2019/19**

(21) Application number: **13847359.0**

(22) Date of filing: **18.10.2013**

(51) Int Cl.:
*C09D 4/06* (2006.01)
*C08K 5/00* (2006.01)
*C09D 7/40* (2018.01)
*G02B 5/28* (2006.01)
*G02B 5/20* (2006.01)
*C09D 4/00* (2006.01)
*C09D 5/32* (2006.01)
*C08K 3/22* (2006.01)
*C08K 5/3417* (2006.01)
*C08K 9/02* (2006.01)
*G02B 1/04* (2006.01)

(86) International application number: **PCT/JP2013/006185**

(87) International publication number: **WO 2014/061279 (24.04.2014 Gazette 2014/17)**

# (54) HEAT-RAY-SHIELDING SHEET

WÄRMESTRAHLENABSCHIRMENDE FOLIE

FEUILLE D'ÉCRANTAGE VIS-À-VIS D'UN RAYON THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2012 JP 2012231814**
**10.12.2012 JP 2012269388**
**08.02.2013 JP 2013022952**

(43) Date of publication of application: **26.08.2015 Bulletin 2015/35**

(73) Proprietor: **Nippon Kayaku Kabushiki Kaisha Tokyo 100-0005 (JP)**

(72) Inventors:
- **HARA, Yukihiro Tokyo 115-8588 (JP)**
- **HIGETA, Takahiro Tokyo 115-8588 (JP)**
- **ARIFUKU, Michiharu Tokyo 115-8588 (JP)**
- **SAITO, Shoko Tokyo 115-8588 (JP)**
- **KIYOYANAGI, Noriko Tokyo 115-8588 (JP)**

(74) Representative: **Gille Hrabal Brucknerstrasse 20 40593 Düsseldorf (DE)**

(56) References cited:
**JP-A- H 037 288**
**JP-A- 2002 131 531**
**JP-A- 2007 316 255**
**JP-A- 2011 209 716**
**JP-A- 2011 213 969**
**JP-A- 2011 241 357**
**JP-A- 2012 159 762**
**JP-A- 2012 173 421**
**US-A1- 2004 234 778**
**US-A1- 2005 163 999**
**US-A1- 2006 154 049**
**US-A1- 2008 102 282**
**US-B1- 6 221 945**

- **DATABASE WPI Week 200660 Thomson Scientific, London, GB; AN 2006-582756 XP002756699, & JP 2006 219662 A (SUMITOMO METAL MINING CO) 24 August 2006 (2006-08-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 910 985 B1

## Description

Technical Field

The present invention relates to a heat-ray-shielding sheet that absorbs and/or reflects heat rays efficiently and has a good transparency and a low haze value.

Background Art

In view of energy conservation and global environmental problems, there is a need for reduction of the load on air conditioners in recent years. For example, a heat-ray-shielding sheet (film) or the like that can serve as a shield against heat rays in sunlight is experimentally applied to a window glass to curb the rise in temperature in a room or in a car in the fields of housing and automobiles. The application is going into actual use.

For example, Patent document 1 discloses a transparent sheet with a heat-ray-shielding property including a resin adhesive-agent layer in which heat-ray-shielding microparticles such as ATO (Antimony Tin Oxide) microparticles are dispersed in an adhesive agent so that the sheet can be laminated to a window glass or the like.

Patent document 2 discloses a heat-ray-shielding film that has, on one face of a substrate, at least two heat-ray-reflecting units each including two or more layers having the refractive indexes differing from each other and, on the opposite face of the substrate, a heat-ray-absorbing layer containing an ultraviolet curable resin and tin-doped indium oxide (ITO) or antimony-doped tin oxide (ATO). The film is characterized by a heat-conductive filler contained in the heat-ray-absorting layer.

Patent document 3 discloses a radio-wave-transmitting heat-ray-reflecting film containing heat-shielding microparticles and silicon oxide, zirconium oxide, or titanium oxide and having a surface resistivity of 10 kΩ/□. The film is produced by applying a coating liquid containing the heat-shielding microparticles and a silicon compound, a zirconium compound such as zirconium oxide, or a titanium compound such as titanium oxide to glass and then baking at 500°C to 600°C.

Patent document 4 discloses a heat-ray-reflecting film having a radio-wave-transmitting property or a radio-wave-shielding property and containing microparticles made of a noble metal such as Ag, Au, and Pt.

Patent document 5 discloses a heat insulator having a layered structure of a cholesteric liquid crystal that reflects light in the near-infrared region and heat-shielding microparticles that absorb heat rays having longer wavelengths than the wavelengths of the light reflected by the cholesteric liquid crystal.

Patent document 6 discloses a heat ray shielding material based on particles with a particle diamter of 1 to 800 nm. The maximum amount of particles disclosed in the examples is 3.8 wt%. The content of microparticles is 0.05 to 45 g/m2 of heat-ray shielding sheet material.

Patent document 7 discloses multilayer film articles including an IR light reflecting multilayer film having alternating layers of a first polymer type and a second polymer type, an IR light absorbing nanoparticle layer including a plurality of metal oxide nanoparticles dispersed in a cured polymeric binder and having a thickness in a range of 1 to 20 $\mu$m. The reflectance disclosed in Fig. 1a, 2 and 3 is lower than 15 % at 2 $\mu$m.

Patent document 8 discloses a laminate comprising metal oxide and dye for the blocking of at least 90 % of IR radiation at 1000 and 2000 nm. The particles, which are preferably present in a resin or polymer layer, present a diameter of 10 to 50 nm. No surface resistivity is reported.

Patent document 9 discloses an interlayer film for laminated glass with particles of 80 nm or less. The amount of binder such as polyvinylbutyral is higher than 40 wt%.

Patent document 10 discloses a dispersion of ATO particles dispersed in a solvent with a binder. The surface resistivity is not disclosed.

Patent document 11 discloses a heat ray reflecting substrate with a transparent substrate and a double layer film on the substrate, the film being composed of a noble metal microparticle containing layer and a transparent coating layer. A surface resistivity of at least about 106 Ω/ is disclosed.

Citation List

Patent Literature

PTL 1: Japanese Unexamined Patent Application Publication No. H10-008010
PTL 2: Japanese Unexamined Patent Application Publication No. 2012-126037
PTL 3: Japanese Unexamined Patent Application Publication No. H05-70178

PTL 4: Japanese Unexamined Patent Application Publication No. 2002-131531
PTL 5: WO 2000/111548
PTL 6: JP 2006 219662
PTL7: US 2006/154049
PTL 8: US 2008/102282
PTL 9: US 2004/234778
PTL 10: US 2005/163999
PTL 11: US 6 221 945

Summary of Invention

Technical Problems

The technique in Patent document 1 utilizes only the near-infrared absorption by the ATO microparticles and does not capitalize on the ability of the ATO microparticles to reflect near-infrared light, resulting in an insufficient heat-ray-shielding property. This utilization of only the near-infrared absorption causes heat accumulation in the sheet and causes the resulting problems such as exfoliation of the sheet and thermal cracking due to the heat accumulation. The technique in Patent document 2 achieves a good heat-shielding effect and promotes heat radiation to prevent thermal cracking. The technique shields heat rays with both of the heat-ray-reflecting units and the heat-ray-absorbing layer. The promotion of heat radiation is achieved by incorporating the heat-conductive filler in the heat-ray-absorbing layer to prevent thermal cracking due to heat accumulation in the heat-ray-absorbing layer, and preferably by controlling the surface roughness and the maximum cross-section height so that these quantities will fall within a specific range. However, this technique requires incorporation of the heat-conductive filler. Patent document 3 has a problem that the technique is not applicable to a resin substrate such as a PET film because the film is formed by application to a substrate and successive bake at 600°C. Patent document 4 has problems that the film is expensive because a noble metal is used as a material for heat-shielding microparticles and that the radio-wave-transmitting property is not sufficiently imparted because the noble metal microparticles are coupled to each other when the film is formed. Patent document 5 has a problem that the heat-shielding effect on longer-wavelength near-infrared light is insufficient because the concentration of the heat-shielding microparticles, which are layered and absorb heat rays having longer wavelengths than the wavelengths of the light reflected by the cholesteric liquid crystal, is low with respect to a resin binder.

To address the various problems described above, the present invention has an object to develop a heat-ray-shielding sheet that is applicable to windows of buildings, windows of vehicles, window glasses for refrigerator or freezer showcases and the like and has a good transparency to visible light, a radio-wave-transmitting property, and a good heat-ray-shielding property.

Solution to Problem

The present inventors have studied hard to obtain a heat-ray-shielding sheet that has a good transparency, a radio-wave-transmitting property, and a greatly-improved heat-ray-shielding property and does not cause thermal cracking or the like in a material such as a glass substrate. Consequently, the present inventors have found that thermal cracking in a material such as a glass substrate can be prevented, with no heat-conductive substance or the like incorporated in a heat-ray-shielding layer, by incorporating metal oxide microparticles (conductive microparticles) made of a material such as tin-doped indium oxide in the heat-ray-shielding layer in a high concentration so that the microparticles will reflect with their plasma oscillations equal to or more than 15% of longer-wavelength (wavelengths of equal to or more than 2,000 nm) near-infrared light to curb the rise in temperature of the heat-ray-shielding layer, and by causing the surface resistivity of the heat-ray-shielding layer to be equal to or more than $10^6$ Ω/□ so that conductivity will not be imparted when formed into a sheet. It has been found that a heat-ray-shielding layer that is not conductive and has a good electromagnetic-wave-transmitting property, a low haze value, and a good transparency is produced in this way, and the present inventors have achieved the present invention.

In other words, although it has been a known technique to incorporate the microparticles in the heat-ray-shielding layer in a high concentration, the present inventors have found through their study that they cannot obtain a heat-ray-shielding sheet having both of a sufficient reflecting property and a sufficient surface resistivity by incorporating the microparticles in a binder component in a high concentration and dispersing the microparticles by a common stirring method (stirring with a homogenizer or the like, for example). The cause seems to be that the reflection by the microparticles with their plasma oscillations cannot be fully utilized because insufficient dispersion of the microparticles causes agglomeration, coupling or the like of the microparticles, thereby preventing the surface resistivity from being the value described above and impairing surface smoothness. The present inventors, however, have found that a heat-ray-shielding layer having both of a sufficient reflecting property and a surface resistivity enough to develop a sufficient radio-wave-transmitting property, a sufficient visible-light-transmitting property, and a low haze value can be obtained by, for example, dispersing the microparticles appropriately in the binder component with a bead mill or the like so that the microparticles will not be agglomerated or coupled and so that the reflecting property of the microparticles will not be impaired and then, for example, applying the dispersion to a support to form a film with a smooth surface.

Specifically, the present invention relates to (1) to (21) below.

(1) According to one aspect of the present invention, a heat-ray-shielding sheet includes a support and a heat-ray-shielding layer above the support. The microparticles have an average particle diameter of equal to or less than 100 nm. The heat-ray-shielding layer includes microparticles and a resin binder filling a void part. The content ratio of the resin binder in the heat-ray-shielding layer is 5 to 40 wt% of the total amount of the heat-ray-shielding layer. The heat-ray-shielding layer is obtainable by a process comprising the step of dispersing the microparticles in the resin binder with a bead mill at a peripheral speed of 3 m/s to 12 m/s. The reflectance of the heat-ray-shielding sheet at a wavelength of at least 2,000 nm is at least 15%. The surface resistivity of the heat-ray-shielding sheet is equal to or more than $10^6$ Ω/□.

(2) In the heat-ray-shielding sheet according to (1), the maximum height difference of a surface of the heat-ray-shielding layer may be equal to or less than 60 nm.

(3) In the heat-ray-shielding sheet according to (1) or (2), the haze value of the heat-ray-shielding layer may be equal to or less than 3%.

(4) In the heat-ray-shielding sheet according to any one of (1) to (3), the powder resistivity of the microparticles may be equal to or less than 10 Ω·cm.

(5) In the heat-ray-shielding sheet according to any one of (1) to (4), the microparticles may be made of at least one selected from the group consisting of tin oxide, indium oxide, zinc oxide, and tungsten oxide.

(6) In the heat-ray-shielding sheet according to any one of (1) to (5), the microparticles may be made of tin-doped indium oxide.

(7) In the heat-ray-shielding sheet according to any one of (1) to (6), the content ratio of the microparticles may be 60 to 95 wt% in the heat-ray-shielding sheet.

(8) In the heat-ray-shielding sheet according to any one of (1) to (7), the visible transmittance of the heat-ray-shielding layer may be equal to or more than 70%.

(9) In the heat-ray-shielding sheet according to any one of (1) to (7), the microparticles may be conductive microparticles. The heat-ray-shielding layer may further include a near-infrared-absorbing dye. The near-infrared-absorbing dye may be dispersed in the resin binder.

(10) In the heat-ray-shielding sheet according to any one of (1) to (7), the heat-ray-shielding sheet may further include a dye layer containing a near-infrared-absorbing dye in addition to the heat-ray-shielding layer.

(11) In the heat-ray-shielding sheet according to (9) or (10), the heat-ray-shielding sheet may have a visible transmittance equal to or more than 50%. The heat-ray-shielding sheet may have a haze value equal to or less than 3%.

(12) In the heat-ray-shielding sheet according to any one of (9) to (11), the heat-ray-shielding sheet may include at least one of a porphyrazine dye and a diimmonium dye as the near-infrared-absorbing dye.

(13) In the heat-ray-shielding sheet according to according to any one of (9) to (12), the heat-ray-shielding sheet may include, as the porphyrazine dye, a porphyrazine dye represented by Formula (1) below.

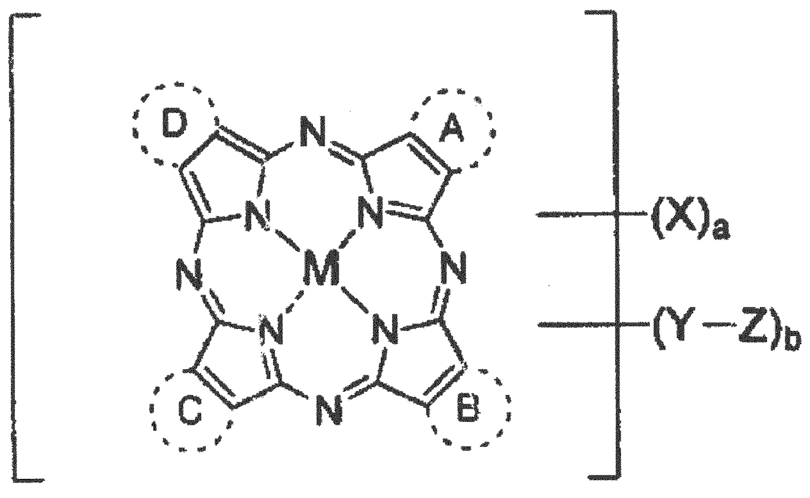

(1)

[In Formula (1), M represents a metal atom, a metal oxide, a metal hydroxide, a metal halice, or a hydrogen atom.

Each of the broken-line portions of the rings A, B, C, and D is independently any one of the structures of Formulae (2) to (8) below:

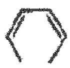 (2) 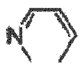 (3) 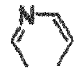 (4) 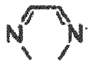 (5) 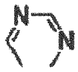 (6) 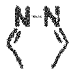 (7) 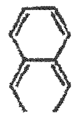 (8)

where the opening portion of each of the rings A, B, C, and D is bonded to the skeleton structure to form an aromatic ring. X represents a lower alkyl group, a lower alkoxy group, an amino group, a nitro group, a halogen group, a hydroxy group, a carboxy group, a sulfonic acid group, or a sulfonamido group. Y represents a divalent cross-linking group. Z represents a sulfonic acid group, a carboxy group, a primary or secondary amine residue derived from a primary or secondary amine by removal of at least one hydrogen atom on the nitrogen atom, an acid amido group, or a nitrogen-atom containing heterocyclic residue derived from a nitrogen-atom containing heterocyclic by removal of at least one hydrogen atom on a nitrogen atom. a and b each represent the number of the corresponding group, are both average values, and are each independently equal to or more than 0 and equal to or less than 12. The sum of a and b is equal to or more than 0 and equal to or less than 12.].

(14) In the heat-ray-shielding sheet according to (13), each of the rings A, B, C, and D in Formula (1) may be independently any one of Formula (2), Formula (4), or Formula (8).

(15) In the heat-ray-shielding sheet according to (13) or (14), M in Formula (1) may be VO or Cu.

(16) In the heat-ray-shielding sheet according to any one of (13) to (15), Y in Formula (1) may be an alkylene group having 1 to 3 carbon atoms. Z in Formula (1) may be a phthalimido group that may have a substituent or a piperazino group that may have a substituent.

(17) In the heat-ray-shielding sheet according to (14) or (15), the porphyrazine dye of Formula (1) may be a porphyrazine dye represented by Formula (9) below:

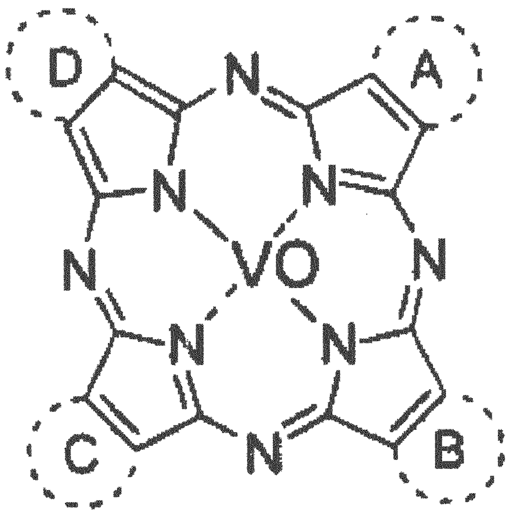 (9)

[where each of the rings A, B, C, and D in Formula (9) is independently a structure of Formula (4) or Formula (8) below:

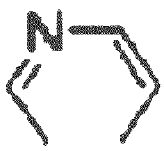 (4) 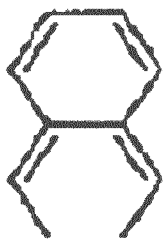 (8)

where the opening portion of each of the rings A, B, C, and D is bonded to the skeleton structure to form an aromatic

ring].

(18) In the heat-ray-shielding sheet according to according to any one of (9) to (17), the heat-ray-shielding sheet may further include a reflecting layer having a radio-wave-transmitting property and configured to reflect light of at least one wavelength in the wavelength region of 780 to 2,000 nm.

(19) In the heat-ray-shielding sheet according to (18), the reflecting layer may be at least one selected from the group consisting of at least one cholesteric-liquid-crystal layer, a dielectric multilayer, and a birefringent multilayer.

(20) In the heat-ray-shielding sheet according to (19), the reflecting layer may be the at least one cholesteric-liquid-crystal layer.

(21) In the heat-ray-shielding sheet according to according to any one of (1) to (20), the resin binder may be a cured product of a thermosetting or light curable resin or may be a thermoplastic resin.

[Effects of the Invention]

The heat-ray-shielding sheet according to the present invention can prevent thermal cracking in a glass substrate and the like by reducing heat accumulation in the heat-ray-shielding layer not only because heat-shielding microparticles have a good infrared-absorbing property but also because the sheet reflects equal to or more than a specific ratio of light of the longer wavelengths, equal to or more than 2,000 nm, for example, of the near-infrared region (780 nm to 2,500 nm). The sheet has a good radio-wave-transmitting property because the sheet has a large surface resistivity. In addition, the sheet has a high transparency because the sheet has a good visible transmittance and a low haze value. The heat-ray-shielding sheet according to the present invention can therefore effectively and greatly improve the heat-ray-shielding property while preventing thermal cracking in a glass substrate and the like.

Description of Embodiments

FIGs. 1 and 2 are model diagrams each illustrating a heat-ray-shielding sheet according to the present invention.

[Mode for Carrying out the Invention]

The heat-ray-shielding sheet according to the present invention includes a heat-ray-shielding layer on a support. The heat-ray-shielding layer contains microparticles (heat-shielding microparticles) having an average particle diameter of equal to or less than 100 nm and a binder component containing a resin binder filling a void part between the microparticles. The content ratio of the resin binder in the heat-ray-shielding layer is 5 to 40 wt% of a total amount of the heat-ray-shielding layer, and the heat-ray-shielding layer is obtainable as defined in claim 1. In addition, the heat-ray-shielding sheet is characterized by the features that the reflectance of the heat-ray-shielding sheet at a light wavelength of at least 2,000 nm is at least 15% and that the surface resistivity of the heat-ray-shielding sheet is equal to or more than $10^6$ Ω/□.

In the present invention, dispersing the microparticles, preferably transparent metal oxide microparticles (conductive microparticles), in the binder component in a high concentration so that the microparticles will not be coupled or agglomerated and so that the near-infrared-reflecting property will not be impaired and then applying the dispersion to a support to form a smooth film can cause the surface resistivity of the heat-ray-shielding sheet to be equal to or more than $10^6$ Ω/□ and cause the reflectance of the heat-ray-shielding sheet at light wavelengths of longer-wavelength near-infrared light (equal to or more than 2,000 nm) to be equal to or more than 15%.

When the surface resistivity of the heat-ray-shielding sheet is equal to or more than $10^6$ Ω/□, the layer can transmit radio waves. The surface resistivity is preferably equal to or more than $10^7$ Ω/□, more preferably equal to or more than $10^8$ Ω/□, even more preferably equal to or more than $10^9$ Ω/□, and most preferably equal to or more than $10^{9.5}$ Ω/□. The values of the surface resistivity have no upper limit, but the practical upper limit of the surface resistivity of the heat-ray-shielding sheet is about $10^{13}$ Ω/□, preferably about $10^{12.5}$ Ω/□.

The reflectance of the heat-ray-shielding sheet at light wavelengths of longer-wavelength near-infrared light (light wavelengths of at least 2,000 nm) only needs to be equal to or more than 15%, but higher values of the reflectance are preferable. The reflectance is preferably equal to or more than 20%, more preferably equal to or more than 25%, even more preferably equal to or more than 28%. The most preferable aspect of the present invention can achieve equal to or more than 30%. A higher upper limit of the reflectance is better, but the practically achievable range is up to about 37%, and the common upper limit is up to about 35%.

In a preferable combination of the surface resistivity and the reflectance, the value of the surface resistivity is any one selected from the group consisting of the above-described preferable values, more preferable values, even more preferable values, and most preferable values, and the value of the reflectance is any one selected from the group consisting of the above-described preferable values, more preferable values, and most preferable values. Examples of the preferable combination include a combination in which the value of the surface resistivity is equal to or more than

$10^8$ Ω/□ and the value of the reflectance is any one selected from the group consisting of equal to or more than 20%, equal to or more than 25%, and equal to or more than 28%. Examples of a more preferable combination include a combination in which the value of the surface resistivity is equal to or more than $10^9$ Ω/□ and the value of the reflectance is any one selected from the group consisting of equal to or more than 20%, equal to or more than 25%, and equal to or more than 28%.

The heat-ray-shielding layer of the invention is obtainable by the following process. A dispersing method satisfying the values of the combinations described above is a dispersing method with a bead mill. The dispersing method with a bead mill at a peripheral speed of equal to or more than 3 m/s is commonly employed for dispersing the microparticles to satisfy the combinations of the value of the surface resistivity and the value of the reflectance described above. The peripheral speed is preferably equal to or more than 5 m/s, more preferably equal to or more than 8 m/s. The combinations described above cannot be satisfied when the peripheral speed is too high. The peripheral speed is preferably equal to or less than about 12 m/s, more preferably equal to or less than 11 m/s in common conditions.

To ensure the sufficient transparency of the heat-ray-shielding sheet, the haze value of the heat-ray-shielding sheet is commonly equal to or less than 8%, preferably equal to or less than 5%, more preferably equal to or less than 2%, even more preferably equal to or less than 1%, and most preferably equal to or less than 0.8%.

An aspect of the heat-ray-shielding sheet satisfying the haze values described above while satisfying the combinations of the surface resistivity and the reflectance described above is more preferable. An aspect satisfying the preferable haze values or the more preferable haze values described above while satisfying the combinations of the surface resistivity and the reflectance described above is extremely preferable. An example of the combinations is a combination in which the surface resistivity of the heat-ray-shielding sheet is equal to or more than $10^6$ Ω/□, the reflectance of the heat-ray-shielding sheet at light wavelengths of the longer-wavelength near-infrared light (equal to or more than 2,000 nm) is equal to or more than 15%, and the haze value of heat-ray-shielding sheet is any one selected from the group consisting of equal to or less than 8%, equal to or less than 5%, equal to or less than 3%, equal to or less than 2%, and equal to or less than 1%. Another example of the preferable combination is a combination in which the surface resistivity of the heat-ray-shielding sheet is equal to or more than $10^8$ Ω/□, the reflectance is equal to or more than 15%, and the haze value is equal to or less than 3%, more preferably equal to or less than 1%. Another example of the more preferable combination is a combination in which the surface resistivity is equal to or more than $10^9$ Ω/□, the reflectance is equal to or more than 15%, the haze value is equal to or less than 1%, more preferably equal to or less than 0.8%. An example of another more preferable combination is a combination in which the surface resistivity is equal to or more than $10^9$ Ω/□, the reflectance is equal to or more than 15%, and the haze value is equal to or less than 1%, more preferably equal to or less than 0.8%. An example of an even more preferable combination is a combination in which the surface resistivity is equal to or more than $10^9$ Ω/□, the reflectance described above is equal to or more than 20% and more preferably equal to or more than 25%, and the haze value described above is equal to or less than 1% and more preferably equal to or less than 0.8%.

The visible transmittance of the heat-ray-shielding sheet is preferably equal to or more than 70%, more preferably equal to or more than 74%, and even more preferably equal to or more than 80%.

The above-described values of the surface resistivity, the reflectance, the haze value, and the visible transmittance of the heat-ray-shielding sheet are all determined using the heat-ray-shielding layer formed on a poly(ethylene terephthalate) (PET) support having a thickness of 100 μm, a visible transmittance of 92%, and a haze value of 0.3%. The heat-ray-shielding layer is formed so that the layer will have a thickness of 500 nm after being dried or cured. These values therefore involve the effects of the PET support. In the present invention, these values are assumed to be the haze value and the value of the visible transmittance of the heat-ray-shielding layer for convenience. Thus, the values in the heat-ray-shielding layer are the same as the values in the heat-ray-shielding sheet when the heat-ray-shielding sheet according to the present invention consists of two components, that is, the heat-ray-shielding layer and the PET.

Suitable microparticles for use in the present invention are heat-shielding microparticles having at least one of a good absorbing property and a good scattering property of light from the near-infrared region to the far-infrared region. The heat-shielding microparticles preferably have a good visible-light-transmitting property and absorb no or little visible light (absorb equal to or less than 10%, preferably equal to or less than 5%, and more preferably equal to or less than 1% of visible light, for example). Among the heat-shielding microparticles, preferable microparticles are electrically conductive microparticles having their plasma wavelength in the near-infrared region, an example of which is conductive microparticles (conductive heat-shielding microparticles) that shield light in the near-infrared region. Examples of the conductive microparticles include metal oxide microparticles. Concrete examples include tin oxide, indium oxide, zinc oxide, tungsten oxide, chromium oxide, and molybdenum oxide. Among these examples, microparticles made of a metal oxide such as tin oxide, indium oxide, zinc oxide, and tungsten oxide having no light-absorbing property in the visible region are preferable, and microparticles made of indium oxide are particularly preferable.

Doping the oxide with a third component to improve the electrical conductivity of the oxide is very preferable. Examples of a dopant selected for this object include Sb, V, Nb, and Ta for tin oxide, Zn, Al, Sn, Sb, Ga, and Ge for indium oxide, Al, Ga, In, Sn, Sb, and Nb for zinc oxide, Cs, Rb, K, Tl, In, Ca, Sr, Fe, Sn, and Al for tungsten oxide. In

the present invention, tin-doped indium oxide (also referred to as ITO) or antimony-doped tin oxide (ATO) is more preferable, and tin-doped indium oxide (ITO) is even more preferable.

The content of the dopant is not particularly limited but is commonly about 1 to 20 wt%, preferably about 5 to 15 wt% of the total amount of the doped metal oxide. The same applies to the content of tin in ITO.

The microparticles used in the present invention is microparticles having an average particle diameter of equal to or less than 100 nm, commonly 1 to 100 nm. The average particle diameter of the microparticles is preferably 10 to 50 nm, more preferably 10 to 40 nm, and most preferably about 10 to 30 nm. The average particle diameter is calculated from the specific surface area obtained by the BET method (Brunauer, Emmett and Teller's equation).

A too large average particle diameter increases the haze value of the formed heat-ray-shielding sheet and impairs the visibility.

Microparticles used as the above-described microparticles have a powder resistivity under compression with 60 MPa of commonly equal to or less than 100 Ω·cm, preferably equal to or less than 10 Ω·cm, more preferably equal to or less than 2 Ω·cm, and most preferably equal to or less than 1 Ω·cm (measured by Powder Resistivity Measurement System MCP-PD51 manufactured by Mitsubishi Chemical Analytech, Co., Ltd.). The powder resistivity has no particular lower limit, but the common lower limit is equal to or more than 0.1 Ω·cm, preferably equal to or more than 0.4 Ω·m in view of facility of production. When the microparticles have a powder resistivity of more than 100 Ω·cm, the reflection deriving from the plasma oscillations of the microparticles occurs at more than 2,500 nm, and the heat-ray-shielding effect is reduced.

The method for producing the microparticles is not limited as long as the above-described microparticles are obtained. The method can be a known method such as vapor-phase synthesis and liquid-phase synthesis. For example, the indium oxide microparticles can be produced by the method disclosed in Japanese Unexamined Patent Application Publication No. H06-227815. Specifically, the microparticles are obtained in the method by neutralizing a solution of a salt containing a specific element for microparticles with an alkali, filtering and washing the resulting precipitation, and subjecting the precipitation to heat treatment at a high temperature. A method for producing tin oxide microparticles and a method for producing zinc oxide microparticles are respectively disclosed in Japanese Unexamined Patent Application Publication No. H02-105875 and Japanese Unexamined Patent Application Publication No. H06-234522. Commercially available microparticles are also available as long as the microparticles have the performances described above.

Commercially available products as ITO or ultra-fine ITO particles are sold by CIK NanoTek Corporation, Sumitomo Metal Industries, Ltd., Mitsubishi Materials Corporation and other suppliers, and any products satisfying the average particle diameter and the powder resistivity values described above are available. Among these products, ITO-R (manufactured by CIK NanoTek Corporation) is more preferable.

The content ratio of the microparticles in the heat-ray-shielding layer is commonly equal to or more than 40 wt%, preferably equal to or more than 60 wt%, more preferably 70 wt%, even more preferably equal to or more than 75 wt%, and most preferably equal to or more than 80% of the total amount of the heat-ray-shielding layer. A content of equal to or more than 82 wt% is more preferable in some cases. In particular, a content exceeding 80 wt% is preferable because the longer-wavelength near-infrared light can be reflected at a higher rate. The upper limit of the content of the microparticles is up to the limit of film formation with the binder, preferably up to about 95 wt%, more preferably up to about 92 wt%, and even more preferably up to about 90 wt%. Examples of the content region of the microparticles are commonly 40 to 95 wt%, preferably 60 to 95 wt%, more preferably 70 to 95 wt%, even more preferably 75 to 92 wt%, and most preferably more than 80 wt% and equal to or less than 92 wt% of the total amount of the heat-ray-shielding layer. The other portion is commonly a component other than the microparticles (the binder component). A too small amount of the binder component prevents formation of the sheet and causes the microparticles to be coupled to each other, thereby preventing impartation of a radio-wave-transmitting property. A large amount of the binder component results in a low concentration of the microparticles in the heat-ray-shielding layer and therefore achieves a large surface resistivity of the heat-ray-shielding layer. The large amount of the binder component, however, impairs the near-infrared-reflecting property deriving from plasma oscillations of the microparticles in the heat-ray-shielding layer because the distance between the microparticles becomes longer. A too large amount of the binder component prevents impartation of a high near-infrared-reflecting property.

Examples of the binder component include a resin binder. Various additives such as a dispersant, a near-infrared-absorbing dye, an ultraviolet-absorbing agent, an antioxidant, and a light stabilizer may be contained as the binder component as appropriate.

The resin binder in the heat-ray-shielding layer is not particularly limited as long as the resin can maintain the microparticles in a dispersed state. Common examples of the resin binder include a cured product of at least one of a thermoplastic resin and a curable resin cured by heat or light (also referred to as a thermosetting or light curable resin) (specifically, a thermosetting resin or a light curable resin). The content ratio of the resin binder in the heat-ray-shielding layer is 5 to 40 wt%, more preferably 5 to 30 wt%, even more preferably 5 to 25 wt%, and most preferably equal to or more than 5 wt% and less than 20 wt% of the total amount of the heat-ray-shielding layer. An optional additive such as a dispersant is contained by 0 wt% to 80 wt%, preferably 0 wt% to 70 wt%, and more preferably 10 wt% to 70 wt% of

the total amount of the binder component.

Examples of the thermoplastic resin include a high density polyethylene resin, a low density polyethylene resin, a linear low density polyethylene resin, an ultra-low density polyethylene resin, a polypropylene resin, a polybutadiene resin, a cyclic olefin resin, a polymethylpentene resin, a polystyrene resin, an ethylene-vinyl acetate copolymer, an ionomer resin, an ethylene-vinyl alcohol copolymer resin, an ethylene-ethyl acrylate copolymer, an acrylonitrile-styrene resin, an acrylonitrile-chlorinated polystyrene-styrene copolymer resin, an acrylonitrile-acrylic rubber-styrene copolymer resin, an acrylonitrile-butadiene-styrene copolymer resin, an acrylonitrile-EPDM-styrene copolymer resin, a silicone rubber-acrylonitrile-styrene copolymer resin, a cellulose acetate butyrate resin, a cellulose acetate resin, a methacrylic resin, an ethylene-methyl methacrylate copolymer resin, an ethylene-ethyl acrylate resin, a vinyl chloride resin, a chlorinated polyethylene resin, a polytetrafluoroethylene resin, a tetrafluoroethylene-hexafluoropropylene copolymer resin, a tetrafluoroethylene-perfluoroalkyl vinyl ether copolymer resin, an ethylene tetrafluoride-ethylene copolymer resin, a polytrifluorochloroethylene resin, a polyvinylidene fluoride resin, Nylon 4,6, Nylon 6, Nylon 6,6, Nylon 6,10, Nylon 6,12, Nylon 12, Nylon 6,T, Nylon 9,T, an aromatic Nylon resin, a polyacetal resin, an ultra-high-molecular-weight polyethylene resin, a poly(butylene terephthalate) resin, a poly(ethylene terephthalate) resin, a poly(ethylene naphthalate) resin, an amorphous copolyester resin, a polycarbonate resin, a modified polyphenylene ether resin, a thermoplastic polyurethane elastomer, a poly(phenylene sulfide) resin, a polyether ether ketone resin, a liquid crystal polymer, a polytetrafluoroethylene resin, a polyfluoroalkoxy resin, a polyetherimide resin, a polysulfone resin, a polyketone resin, a thermoplastic polyimide resin, a polyamide-imide resin, a polyarylate resin, a polysulfone resin, a polyethersulfone resin, a biodegradable resin, and a biomass resin, but not limited to these examples. A mixture of two or more of these resins may be used.

The weight-average molecular weight of the thermoplastic resin is about 1,000 to 1,000,000, preferably about 2,000 to 500,000, and more preferably about 2,000 to 200,000.

A preferable resin as the thermoplastic resin is a (meth)acrylic resin in view of transparency and the like. A (meth)acrylate polymer is preferable, for example, and a (meth)acrylic copolymer and the like is particularly preferable.

In the present invention, an aspect including the cured product of the curable resin cured by heat or light as the resin binder of the heat-ray-shielding layer is preferable. In particular, an aspect including the cured product of the light curable resin is more preferable.

The thermosetting resin is not particularly limited as long as the resin is a compound having a functional group that can cause the resin to cure by application of heat. Examples of the thermosetting resin include a curable compound having a cyclic ether such as an epoxy group and an oxetanyl group. The light curable resin is not particularly limited as long as the resin is a compound having a functional group that can cause the resin to cure by irradiation of light. Examples of the light curable resin include a resin that includes a curable compound having an unsaturated double bond such as a vinyl group, a vinyl ether group, an allyl group, a maleimide group, and a (meth)acrylic group.

The thermosetting resin having a cyclic ether is not particularly limited, and examples of this thermosetting resin include an epoxy resin (an aliphatic epoxy resin including an alicyclic epoxy resin, or an aromatic epoxy resin), an oxetane resin, and a furan resin. Among these examples, the epoxy resin (that may include an aliphatic ring exemplified by an aliphatic ring having 3 to 12 carbon atoms) and the oxetane resin are preferable in view of reaction rate and versatility. The epoxy resin is not particularly limited, and examples of the epoxy resin include a novolac type such as a phenol novolac type, a cresol novolac type, a biphenyl novolac type, a trisphenol novolac type, and a dicyclopentadiene novolac type; and a bisphenol type such as a bisphenol A type, a bisphenol F type, a 2,2'-diallylbisphenol A type, a hydrogenated bisphenol type, and a polyoxypropylene bisphenol A type. The examples also include glycidylamine.

Examples of commercially available products of the epoxy resins include EPICLON (registered trademark) N-740, N-770, and N-775 (each of the products above is manufactured by Dainippon Ink and Chemicals, Inc.) and Epikote (registered trademark) 152 and Epikote (registered trademark) 154 (each of the products above is manufactured by Japan Epoxy Resin Co. Ltd.) as the phenol novolac epoxy resins. Examples of products of the cresol novolac type include EPICLON (registered trademark) N-660, N-665, N-670, N-673, N-680, N-695, N-665-EXP, and N-672-EXP (each of the products above is manufactured by Dainippon Ink and Chemicals, Inc.); examples of products of the biphenyl novolac type include NC-3000P (manufactured by Nippon Kayaku Co., Ltd.); examples of products of the trisphenol novolac type include EP1032S50 and EP1032H60 (each of the products above is manufactured by Japan Epoxy Resin Co. Ltd.); examples of products of the dicyclopentadiene novolac type include XD-1000-L (manufactured by Nippon Kayaku Co., Ltd.) and HP-7200 (manufactured by Dainippon Ink and Chemicals, Inc.); examples of products of the bisphenol A epoxy compound include Epikote (registered trademark) 828, Epikote (registered trademark) 834, Epikote 1001, Epikote (registered trademark) 1004 (each of the products above is manufactured by Japan Epoxy Resin Cc. Ltd.), EPICLON (registered trademark) 850, EPICLON (registered trademark) 860, and EPICLON (registered trademark) 4055 (each of the products above is manufactured by Dainippon Ink and Chemicals, Inc.); examples of commercially available products of the bisphenol F epoxy compound include Epikote (registered trademark) 807 (manufactured by Japan Epoxy Resin Co. Ltd.) and EPICLON (registered trademark) 830 (manufactured by Dainippon Ink and Chemicals, Inc.); examples of products of the 2,2'-diallylbisphenol A type include RE-810NM (manufactured by Nippon Kayaku Co., Ltd.); examples of products of the hydrogenated bisphenol type include ST-5080 (manufactured by Tohto Kasei Co.,

Ltd.); and examples of products of the polyoxypropylene bisphenol A type include EP-4000 and EP-4005 (each of the products above is manufactured by Asahi Denka Kogyo K.K.).

Examples of commercially available products of the oxetane compound include ETERNACOLL (registered trademark) EHO, ETERNACOLL (registered trademark) OXBP, ETERNACOLL (registered trademark) OXTP, and ETERNACOLL (registered trademark) OXMA (each of the products above is manufactured by Ube Industries, Ltd.). The alicyclic epoxy compound is not particularly limited, and examples of the alicyclic epoxy compound include CELLOXIDE (registered trademark) 2021, CELLOXIDE (registered trademark) 2080, and CELLOXIDE (registered trademark) 3000 (each of the products above is manufactured by Daicel-UCB Company, Ltd.). These curable compounds having cyclic ether groups may be used alone, or two or more of the compounds may be used in combination.

The light curable resin having an unsaturated double bond is not particularly limited. Examples of this light curable resin include a resin having a vinyl group, a vinyl ether group, an allyl group, a maleimide group, or a (meth)acrylic group. Among these examples, the resin having a (meth)acrylic group is preferable in view of reactivity and versatility. For example, a (meth)acrylate compound is preferable. In the present specification, the term such as "(meth)acrylic" means "acrylic" or "methacrylic". For example, "(meth)acrylate" means "acrylate" or "methacrylate".

Examples of the resin having a (meth)acrylic group include a (meth)acrylate compound such as 2-hydroxyethyl (meth)acrylate, 2-hydroxypropyl (meth)acrylate, 1,4-butanediol mono(meth)acrylate, carbitol (meth)acrylate, acryloylmorpholine, a half ester, which is a reaction product of a hydroxy group-containing (meth)acrylate and an acid anhydride of a polycarboxylic acid compound, poly(ethylene glycol) di(meth)acrylate, tri(propylene glycol) di(meth)acrylate, trimethylolpropane tri(meth)acrylate, trimethylolpropane polyethoxy tri(meth)acrylate, glycerine polypropoxy tri(meth)acrylate, a di(meth)acrylate of an ε-caprolactone adduct of neopentylglycol hydroxypivalate (such as KAYARAD (registered trademark) HX-220 and HX-620 manufactured by Nippon Kayaku Co., Ltd., for example), pentaerythritol tetra(meth)acrylate, a poly(meth)acrylate of a reaction product of dipentaerythritol and ε-caprolactone, a dipentaerythritol poly(meth)acrylate (such as KAYARAD (registered trademark) DPHA manufactured by Nippon Kayaku Co., Ltd., for example), and an epoxy (meth)acrylate, which is a reaction product of a mono- or polyglycidyl compound and (meth)acrylic acid.

The glycidyl compound used for the epoxy (meth)acrylate, which is a reaction product of a mono- or polyglycidyl compound and (meth)acrylic acid, is not particularly limited, and examples of the glycidyl compound include a glycidyletherified product of a polyphenol such as bisphenol A, bisphenol F, bisphenol S, 4,4'-biphenylphenol, tetramethylbisphenol A, dimethylbisphenol A, tetramethylbisphenol F, dimethylbisphenol F, tetramethylbisphenol S, dimethylbisphenol S, tetramethyl-4,4'-biphenol, dimethyl-4,4'-biphenylphenol, 1-(4-hydroxyphenyl)-2-[4-(1,1-bis-(4-hydroxyphenyl)ethyl)phenyl]propane, 2,2'-methylene-bis(4-methyl-6-tert-butylphenol), 4,4'-butylidene-bis(3-methyl-6-tert-butylphenol), trishydroxyphenylmethane, resorcinol, hydroquinone, pyrogallol, a phenol having a diisopropylidene skeleton, a phenol having a fluorene skeleton such as 1,1-di-4-hydroxyphenylfluorene, a phenolated polybutadiene, a bromated bisphenol A, a bromated bisphenol F, a bromated bisphenol S, a bromated phenol novolac, a bromated cresol novolac, a chlorated bisphenol S, and a chlorated bisphenol A.

The epoxy (meth)acrylate, which is a reaction product of one of these mono- or polyglycidyl compounds and (meth)acrylic acid, can be obtained by an esterification reaction of the epoxy group thereof with an equivalent amount of (meth)acrylic acid. This synthesis reaction can be carried out by a commonly known method. For example, an equivalent amount of (meth)acrylic acid, a catalyst (such as benzyldimethylamine, triethylamine, benzyltrimethylammonium chloride, triphenylphosphine, and triphenylstibine, for example), and a polymerization inhibitor (such as methoquinone, hydroquinone, methylhydroquinone, phenothiazine, and dibutylhydroxytoluene, for example) are added to resorcin diglycidyl ether, and an esterification reaction is carried out at 80°C to 110°C, for example. The obtained (meth)acrylated resorcin diglycidyl ether is a resin having a radical polymerizable (meth)acryloyl group.

The heat-ray-shielding layer in the present invention can be formed by applying a microparticle dispersion containing microparticles (specifically, heat-ray-shielding microparticles or metal oxide microparticles) having an average particle diameter of equal to or less than 100 nm, a resin binder-forming component (at least one of the thermoplastic resin and the curable resin), and as appropriate a solvent to a support and drying or curing the microparticle dispersion as appropriate.

In addition to the solvent, various additives such as a photoinitiator, a thermal curing agent, a dispersant, a near-infrared-absorbing dye, an ultraviolet-absorbing agent, an antioxidant, and a light stabilizer can be added to the particle dispersion as appropriate.

The photoinitiator is not particularly limited as long as the photoinitiator is for polymerizing unsaturated double bonds, epoxy groups, or the like in the curable resin with irradiation of light. Examples of the photoinitiator include a cationic polymerization photoinitiator and a radical polymerization photoinitiator.

The thermal curing agent is not particularly limited as long as the thermal curing agent is for reacting and crosslinking unsaturated double bonds, epoxy groups, or the like in the curable resin with application of heat. Examples of the thermal curing agent include acid anhydrides, amines, phenols, imidazoles, dihydrazines, Lewis acids, Bronsted acid salts, polymercaptone, isocyanates, and blocked isocyanates. The amount to be used of the photoinitiator is commonly 1 to 20 wt% of the light curable resin.

In the present invention, an aspect including a curable resin, preferably a light curable resin, and more preferably a (meth)acrylate compound as the resin binder and including a photoinitiator, more preferably a radical polymerization photoinitiator as the additive is preferable.

The solvent used for the dispersion of the microparticles is not particularly limited but is preferably water or an organic solvent in the present invention. A mixture of two or more solvents may be used as appropriate. Examples of the organic solvent include a hydrocarbon solvent (such as toluene, xylene, hexane, cyclohexane, and n-heptane), an alcohol solvent (such as methanol, ethanol, isopropyl alcohol, a butanol, t-butanol, and benzyl alcohol), a ketone solvent (such as acetone, methyl ethyl ketone, methyl isobutyl ketone, diisobutyl ketone, cyclohexanone, and acetylacetone), an ester solvent (such as ethyl acetate, methyl acetate, butyl acetate, cellosolve acetate, and amyl acetate), an ether solvent (such as an isopropyl ether, methyl cellosolve, butyl cellosolve, and 1,4-dioxane), a glycol solvent (such as ethylene glycol, diethylene glycol, triethylene glycol, and propylene glycol), a glycol ether solvent (such as diethylene glycol monomethyl ether and propylene glycol monomethyl ether), a glycol ester solvent (such as ethylene glycol monomethyl ether acetate, propylene glycol monomethyl ether acetate, and diethylene glycol monoethyl ether acetate), a glyme solvent (such as monoglyme and diglyme), a halogenated solvent (such as dichloromethane and chloroform), an amide solvent (such as N,N-dimethylformamide, N,N-dimethylacetamide, and N-methyl-2-pyrrolidone), pyridine, tetrahydrofuran, sulfolane, acetonitrile, and dimethyl sulfoxide. The solvent is preferably water, a ketone solvent, an alcohol solvent, an amide solvent, or a hydrocarbon solvent, more preferably toluene or a ketone solvent such as methyl ethyl ketone, methyl isobutyl ketone, and acetylacetone.

A dispersant may be used to disperse the microparticles uniformly. An aspect including a dispersant is preferable in the present invention. The addition amount of the dispersant can commonly vary within a range of 0 to 50 wt% of the microparticles as appropriate. The amount is commonly 1 to 30 wt%, preferably about 1 to 20 wt%.

Examples of the dispersant include a low-molecular-weight dispersant (a dispersant having a molecular weight of less than 2,000, preferably equal to or less than 1,000) and a high-molecular-weight dispersant (having a weight-average molecular weight of about equal to or more than 2,000 and equal to or less than 500,000, preferably 2,000 to 200,000, more preferably about 2,000 to 100,000).

Examples of the low-molecular-weight dispersant include a low-molecular-weight negative-ion (anionic) compound such as a fatty acid salt (soap), an $\alpha$-sulfo fatty acid ester salt (MES), an alkylbenzenesulfonic acid salt (ABS), a linear alkylbenzenesulfonic acid salt (LAS), an alkyl sulfuric acid salt (AS), an alkyl ether sulfuric acid ester salt (AES), and an alkylsulfuric acid triethanol, a low-molecular-weight nonionic compound such as a fatty acid ethanolamide, a polyoxyethylene alkyl ether (AE), a polyoxyethylene alkylphenyl ether (APE), sorbitol, and sorbitan, a low-molecular-weight positive-ion (cationic) compound such as an alkyltrimethylammonium salt, a dialkyldimethylammonium chloride, and an alkylpyridinium chloride, and a low-molecular-weight amphoteric compound such as an alkylcarboxybetaine, sulfobetaine, and lecithin.

The high-molecular-weight dispersant is typified by a high-molecular-weight dispersant having a weight-average molecular weight of equal to or more than 2,000 and equal to or less than 100,000. Examples of the high-molecular-weight dispersant include a high-molecular-weight aqueous dispersant typified by a naphthalenesulfonic acid salt-formalin condensate, a polystyrenesulfonic acid salt, a polyacrylic acid salt, a copolymer salt of a vinyl compound and a carboxylic acid-based monomer, carboxymethylcellulose, poly(vinyl alcohol) and the like, a high-molecular-weight nonaqueous dispersant such as a partial alkyl ester of polyacrylic acid and polyalkylene polyamine, and a high-molecular-weight cationic dispersant such as polyethyleneimine and aminoalkyl methacrylate copolymer. The dispersant is not limited to the examples above as long as the dispersant is preferably applied to the microparticles in the present invention.

In the present invention, the high-molecular-weight dispersant is preferable, and a (meth)acrylate copolymer dispersant is more preferable among the high-molecular-weight dispersants.

Concrete examples of commercially available dispersants are described below.

The examples include FLOWLEN DOPA-15B, FLOWLEN DOPA-17 (manufactured by Kyoeisha Chemical Co., Ltd.), SOLPLUS AX5, SOLPLUS TX5, SOLSPERSE (registered trademark) (the same applies hereinafter) 9000, SOLSPERSE 12000, SOLSPERSE 17000, SOLSPERSE 20000, SOLSPERSE 21000, SOLSPERSE 24000, SOLSPERSE 26000, SOLSPERSE 27000, SOLSPERSE 28000, SOLSPERSE 32000, SOLSPERSE 35100, SOLSPERSE 54000, SOL SIX 250 (manufactured by The Lubrizol Corporation), EFKA 4008, EFKA 4009, EFKA 4010, EFKA 4015, EFKA 4046, EFKA 4047, EFKA 4060, EFKA 4080, EFKA 7462, EFKA 4020, EFKA 4050, EFKA 4055, EFKA 4400, EFKA 4401, EFKA 4402, EFKA 4403, EFKA 4300, EFKA 4320, EFKA 4330, EFKA 4340, EFKA 6220, EFKA 6225, EFKA 6700, EFKA 6780, EFKA 6782, EFKA 8503 (manufactured by EFKA Additives B.V.), AJISPER PA111, AJISPER (registered trademark) (the same applies hereinafter) PB711, AJISPER PB821, AJISPER PB822, AJISPER PN411, FAMEX L-12 (manufactured by Ajinomoto Fine-Techno Co., Inc.), TEXAPHOR UV21, TEXAPHOR UV61 (manufactured by Cognis Japan Ltd.), DISPERBYK-101, DISPERBYK-102, DISPERBYK-106, DISPERBYK-108, DISPERBYK-111, DISPERBYK-116, DISPERBYK-130, DISPERBYK-140, DISPERBYK-142, DISPERBYK-145, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, DISPERBYK-180, DISPERBYK-182, DISPERBYK-192, DISPERBYK-193,

DISPERBYK-2000, DISPERBYK-2001, DISPERBYK-2020, DISPERBYK-2025, DISPERBYK-2050, DISPERBYK-2070, DISPERBYK-2155, DISPERBYK-2164, BYK-220S, BYK-300, BYK-306, BYK-320, BYK-322, BYK-325, BYK-330, BYK-340, BYK-350, BYK-377, BYK-378, BYK-380N, BYK-410, BYK-425, BYK-430 (manufactured by BYK Japan K.K.), DISPARLON (registered trademark) (the same applies hereinafter) 1751N, DISPARLON 1831, DISPARLON 1850, DISPARLON 1860, DISPARLON 1934, DISPARLON DA-400N, DISPARLON DA-703-50, DISPARLON DA-725, DISPARLON DA-705, DISPARLON DA-7301, DISPARLON DN-900, DISPARLON NS-5210, DISPARLON NVI-8514L, HIP LARD ED-152, HIP LARD ED-216, HIP LARD ED-251, HIP LARD ED-360 (manufactured by Kusumoto Chemicals, Ltd.), FTX-207S, FTX-212P, FTX-220P, FTX-220S, FTX-228P, FTX-710LL, FTX-750LL, FTERGENT (registered trademark) (the same applies hereinafter) 212P, FTERGENT 220P, FTERGENT 222F, FTERGENT 228P, FTERGENT 245F, FTERGENT 245P, FTERGENT 250, FTERGENT 251, FTERGENT 710FM, FTERGENT 730FM, FTERGENT 730LL, FTERGENT 730LS, FTERGENT 750DM, FTERGENT 750FM (manufactured by NEOS Co., Ltd.), AS-1100, AS-1800, AS-2000 (manufactured by Toagosei Co., Ltd.), KAOCER (registered trademark) (the same applies hereinafter) 2000, KAOCER 2100, KDH-154, MX-2045L, HOMOGENOL (registered trademark) (the same applies hereinafter) L-18, HOMOGENOL L-95, RHEODOL (registered trademark) (the same applies hereinafter) SP-010V, RHEODOL SP-030V, RHEODOL SP-L10, RHEODOL SP-P10 (manufactured by Kao Corp.), EPAN U103, CYANOL DC902B, NOIGEN (registered trademark) EA-167, PLYSURF A219B, PLYSURF AL (manufactured by DKS Co. Ltd.), MEGAFAC (registered trademark) (the same applies hereinafter) F-477, MEGAFAC 480SF, MEGAFAC F-482 (manufactured by DIC CORP.), Silface (registered trademark) SAG503A, Dynol 604 (manufactured by Nissin Chemical Industry Co., Ltd.), SN-SPERSE 2180, SN-SPERSE 2190, and SN-LEVELLER S-906 (manufactured by San Nopco Ltd.), S-386, and S-420 (manufactured by AGC Seimi Chemical Co., Ltd).

In the present invention, an aspect including the near-infrared-absorbing dye in the heat-ray-shielding layer is preferable. Incorporating the near-infrared-absorbing dye in the heat-ray-shielding layer can improve the heat-ray-absorbing property. When the heat-ray-shielding layer includes the near-infrared-absorbing dye, the content of the near-infrared-absorbing dye is not particularly limited but is within a range of about 1 to 30 wt%, preferably 3 to 15 wt% of the total amount of heat-ray-shielding layer.

In the present invention, the heat-ray-shielding sheet may further include a dye layer including the near-infrared-absorbing dye in addition to the heat-ray-absorbing layer instead of incorporating the near-infrared-absorbing dye in the heat-ray-shielding layer. In this case, the dye layer may be a dye alone, but is commonly and preferably formed by dispersing the dye in the resin binder. When the dye is dispersed in the resin binder, the dye layer may be formed by applying a dispersion, which is prepared by adding the dye to 1 part by weight of the resin binder in a range of 0.01 to 20 parts by weight and adding a solvent to the resin binder as appropriate, to a layer such as a support on which the dye layer is to be formed and then carrying out at least one of drying and curing of the dispersion as appropriate. The dye layer is commonly and preferably formed backward of the heat-ray-shielding layer with respect to the direction of incident light. For example, a method such as the method in which the dye layer is formed on the support (or a reflecting layer described below) and the heat-ray-shielding layer is formed on the dye layer is preferable. The dye layer may be formed on a face of the support opposite to the heat-ray-shielding layer in some cases.

In the present invention, an aspect in which the heat-ray-shielding layer includes the near-infrared-absorbing dye together with the microparticles is preferable.

The term "near-infrared-absorbing dye" is a general term for dyes that absorb near-infrared light (having wavelengths of about 780 to 2,000 nm), which is infrared light close to the visible region. Any known near-infrared-absorbing dyes can be used. Examples of kinds of the near-infrared-absorbing dye include an azo dye, an aluminum dye, an anthraquinone dye, a cyanine dye, a diimmonium dye, a dithiol metal complex dye, a squarylium dye, and a porphyrazine dye. To enhance durability, the porphyrazine dye and the diimmonium dye are preferable. In the present invention, the porphyrazine dye, which blocks heat rays efficiently, is more preferable, and any porphyrazine dyes can be used.

Among the porphyrazine dyes, the porphyrazine dye represented by Formula (1) below is preferable.

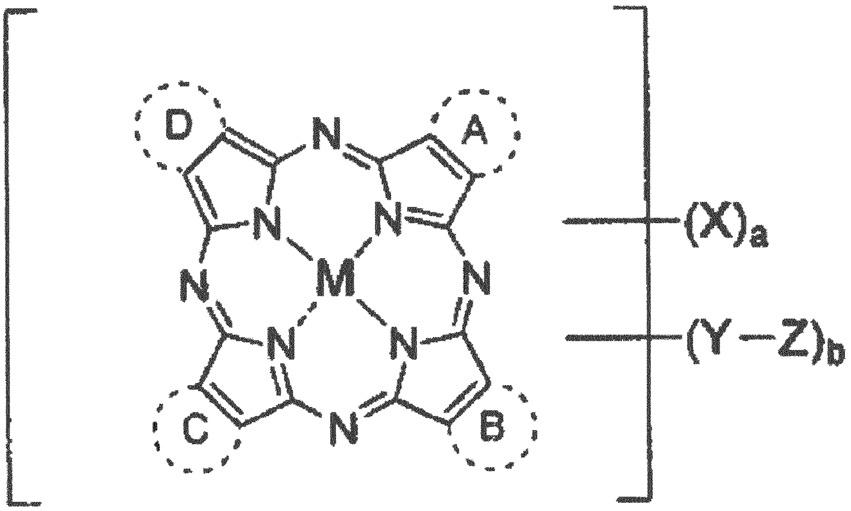

(1)

In Formula (1), M represents a metal atom, a metal oxide, a metal hydroxide, a metal halide, or a hydrogen atom. Each of the broken-line portions of the rings A, B, C, and D is independently one of the structures of Formulae (2) to (8) below:

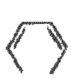 (2) 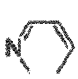 (3) 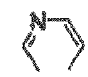 (4) 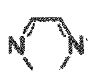 (5) 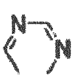 (5) 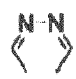 (7) 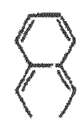 (8)

X represents a lower alkyl group, a lower alkoxy group, an amino group, a nitro group, a halogen group, a hydroxy group, a carboxy group, a sulfonic acid group, or a sulfonamido group. Y represents a divalent cross-linking group. Z represents a sulfonic acid group, a carboxy group, a primary or secondary amine residue derived from a primary or secondary amine by removal of at least one hydrogen atom on the nitrogen atom, an acid amido group, or a nitrogen-atom containing heterocyclic residue derived from a nitrogen-atom containing heterocyclic by removal of at least one hydrogen atom on the nitrogen atom. a and b each represent the numbers of the corresponding group, are both average values, and are each independently equal to or more than 0 and equal to or less than 12. The sum of a and b is equal to or more than 0 and equal to or less than 12. The opening portions of Formulae (2) to (8) above are bonded to the skeleton structure to form aromatic rings of the rings A, B, C and D.

When the broken-line portion of the ring A, B, C, or D is Formula (3) or (4) above, the aromatic ring formed is a pyridine ring. When the broken-line portion is one of Formulae (5) to (7) above, the aromatic ring formed is a pyrazine ring. When the broken-line portion is Formula (8) above, the aromatic ring formed is a naphthalene ring.

Examples of the primary or secondary amine residue derived from a primary or secondary amine by removal of at least one hydrogen atom on the nitrogen atom represented by Z include a mono-lower alkylamino group and a di-lower alkylamino group. Examples of the acid amido group include a phthalic acid amido group that may have a substituent. Examples of the nitrogen-atom containing heterocyclic residue derived from a nitrogen-atom containing heterocyclic by removal of at least one hydrogen atom on the nitrogen atom include a pyridino group that may have a substituent, a piperazino group that may have a substituent, and a piperidino group that may have a substituent.

In Formula (1) above, examples of the aromatic rings of the rings A to D include, in addition to a benzene ring and a naphthalene ring, a nitrogen-containing aromatic heterocycle having one or two nitrogen atoms such as a pyridine ring, a pyrazine ring, and a pyridazine ring. Among these examples, any one or a combination of two rings selected from the group consisting of a benzene ring, a pyridine ring, and a naphthalene ring is preferable. All of the rings may be the same aromatic ring. An average of 1 to 4, preferably 2 to 4 of the rings A to D are preferably pyridine rings or naphthalene rings. In this case, the others are benzene rings. A more preferable combination includes a total of 4 rings consisting of 0 to 2 benzene rings, 0 to 3 pyridine rings, and 1 to 4 naphthalene rings. An even more preferable combination includes a total of 4 rings consisting of 0 to 2 benzene rings and 2 to 4 naphthalene rings or a total of 4 rings consisting of 1 to 3 pyridine rings and 1 to 3 naphthalene rings. An aspect in which the rings A to D consist of a combination of pyridine rings and naphthalene rings is one of the even more preferable aspects. Among the pyridine rings, the pyridine ring formed from the structure of Formula (4) above is preferable.

In Formula (1) above, M represents a hydrogen atom, a metal atom, a metal oxide, a metal hydroxide, or a metal halide. When M is other than a hydrogen atom, this M means that the porphyrin ring in Formula (1) has what is

called a central metal. When M is a hydrogen atom, the porphyrin ring has no central metal.

Concrete examples of the metal atom represented by M above include Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, and Bi.

Examples of the metal oxide include VO and GeO. Examples of the metal hydroxide include $Si(OH)_2$, $Cr(OH)_2$, $Sn(OH)_2$, and AlOH. Examples of the metal halide include $SiCl_2$, VCl, $VCl_2$, VOCl, FeCl, GaCl, ZrCl, and AlCl. Among these examples, metal atoms such as Fe, Co, Cu, Ni, Zn, Al, and V, metal oxides such as VO, and metal hydroxides such as AlOH are preferable. Cu or VO is more preferable, and VO is most preferable.

X in Formula (1) above represents a lower alkyl group, a lower alkoxy group, an amino group, a nitro group, a halogen group, a hydroxy group, a carboxy group, a sulfonic acid group, or a sulfonamido group. "Lower" means 1 to 4 carbon atoms in the present invention.

Examples of the divalent cross-linking group represented by Y include an alkylene group having 1 to 3 carbon atoms, $-CO_2-$, $-SO_2-$, and $-SO_2NH(CH_2)c-$ (where c represents 0 to 4). Y is preferably an alkylene group having 1 to 3 carbon atoms or $-SO_2NH-$, more preferably an alkylene group having 1 to 3 carbon atoms.

Preferable examples of Z include a carboxy group, a sulfonic acid group, a phthalimido group that may have a substituent, a piperazino group that may have a substituent, and a piperidino group that may have a substituent. Z is more preferably a carboxy group, a sulfonic acid group, or a phthalimido group that may have a substituent, even more preferably the phthalimido group that may have a substituent. When Z is the phthalimido group that may have a substituent, the piperazino group that may have a substituent, or the piperidino group that may have a substituent, examples of the substituent include a lower alkyl group, a lower alkoxy group, a substituted amino group, a nitro group, a halogen atom, and a sulfonic acid group. When Z is the group that may have a substituent, an unsubstituted or halogeno-substituted group is preferable. Z is more preferably an unsubstituted or halogeno-substituted phthalimido group and most preferably an unsubstituted phthalimide.

The substituted amino group in the near-infrared-absorbing dye of Formula (1) is not particularly limited, and examples of the substituted amino group include an amino group substituted by a lower alkyl group or a lower alkoxy group.

"Lower" means 1 to 4 carbon atoms in the present invention. The halogen atom is preferably Cl, Br, or I.

In Formula (1) above, a and b are each independently equal to or more than 0 and equal to or less than 12, and the sum of a and b is equal to or more than 0 and equal to or less than 12. Preferably, a and b are each independently equal to or more than 0 and equal to or less than 4, and the sum of a and b is equal to or more than 0 and equal to or less than 4. In the present invention, Formula (1) is preferably a porphyrazine dye in which a and b are both 0.

Concrete examples of the porphyrazine dye represented by Formula (1) above are listed in the Table 1 below with the compound numbers

**[0085]** The examples below are typical dyes listed for concrete description of the dyes in the present invention, and the present invention is not limited to the examples below. When the nitrogen-containing aromatic heterocycle of the rings A to D is Formula (3), (4), or (6) above, positional isomers of the nitrogen atom(s) exist, and synthesis of the dye yields a mixture of the isomers. Isolation of each isomer or identification by analysis of these isomers is difficult. The mixture is therefore commonly used as it is. The dyes in the present invention include such a mixture. In the present specification, these isomers and the like are not distinguished. When represented by a structural formula, one typical structural formula is presented for convenience.

In Table 1, the numbers in the columns A to D represent formula numbers of Formulae (2) to (8) above, values of a and b are listed in the corresponding columns a and b, and group names are listed in the columns X, Y, and Z. The horizontal lines "-" in the columns X, Y, and Z mean that the compounds have no substituent.

Table 1

| Compound | A | B | C | D | a | b | X | Y | Z |
|---|---|---|---|---|---|---|---|---|---|
| 1 | 2 | 8 | 8 | 8 | 0 | 0 | - | - | - |
| 2 | 2 | 8 | 2 | 8 | 0 | 0 | | - | - |
| 3 | 2 | 8 | 8 | 8 | 0 | 2 | - | Ethylene group | Unsubstituted phthalimide group |
| 4 | 2 | 8 | 2 | 8 | 2 | 0 | Sulfonic acid group | - | - |
| 5 | 2 | 8 | 2 | 8 | 2 | 0 | Carboxylic acid group | - | - |
| 6 | 2 | 2 | 2 | 8 | 0 | 0 | - | - | - |
| 7 | 3 | 8 | 3 | 8 | 0 | 0 | - | - | - |
| 8 | 3 | 3 | 3 | 8 | 0 | 0 | - | - | - |
| 9 | 3 | 8 | 8 | 8 | 0 | 0 | - | - | - |

(continued)

| Compound | A | B | C | D | a | b | X | Y | Z |
|---|---|---|---|---|---|---|---|---|---|
| 10 | 4 | 8 | 4 | 8 | 0 | 0 | - | - | - |
| 11 | 4 | 8 | 8 | 8 | 0 | 2 | - | Ethylene group | Unsubstituted phthalimide group |
| 12 | 4 | 8 | 8 | 8 | 0 | 0 | - | - | - |
| 13 | 4 | 8 | 4 | 8 | 2 | 0 | Nitro group | - | - |
| 14 | 4 | 4 | 4 | 8 | 0 | 0 | - | - | - |
| 15 | 5 | 8 | 8 | 8 | 2 | 0 | Hydroxy group | - | - |
| 16 | 5 | 8 | 5 | 8 | 0 | 0 | - | - | - |
| 17 | 5 | 5 | 5 | 8 | 0 | 0 | - | - | - |
| 18 | 6 | 8 | 8 | 8 | 0 | 1 | - | Ethylene group | Unsubstituted piperazino group |
| 19 | 6 | 8 | 8 | 8 | 2 | 0 | Sulfonamido group | - | - |
| 20 | 6 | 6 | 6 | 8 | 0 | 0 | - | - | - |
| 21 | 7 | 8 | 8 | 8 | 2 | 0 | Amino group | - | - |
| 22 | 7 | 8 | 7 | 8 | 0 | 0 | - | - | - |
| 23 | 7 | 7 | 7 | 8 | 0 | 0 | - | - | - |
| 24 | 2 | 2 | 2 | 2 | 0 | 0 | - | - | - |
| 25 | 8 | 8 | 8 | 8 | 0 | 0 | - | - | - |

The porphyrazine dye represented by Formula (1) above is commonly a known compound or can be easily synthesized based on a known compound.

The porphyrazine dye represented by Formula (1) above can be synthesized according to known methods disclosed in WO 2010/143619 and WO 2010/013455, for example. The compound represented by Formula (1) obtained by these methods is a mixture of substitution position isomers due to variations of the substitution positions of the nitrogen-containing aromatic heterocycles and substitution positions of nitrogen atoms of the nitrogen-containing aromatic heterocycles of the rings A to D, as described in the known documents above.

The compounds represented by No. 3 and No. 18 in Table 1 above can be synthesized according to known methods disclosed in, in addition to the pamphlets of the international publications above, Japanese Patent No. 2507786 and Japanese Patent No. 3813750, for example.

Preferable aspects of the dispersion for the heat-ray-shielding layer according to the present invention will be described below. For contents, composition ratios or the like, "%" means "wt%" unless otherwise noted.

i. A dispersion containing 60% to 95% of metal oxide microparticles having an average particle diameter of equal to or less than 100 nm, 5% to 40% of a resin binder, 0% to 38% of an additive, and a solvent, with respect to the total amount of the solid content (the total amount of the components left after solvent removal: commonly the total amount of all the components other than the solvent) in the dispersion.
ii. The dispersion described in the aspect i, in which the metal oxide microparticles have a powder resistivity of 10 Ω·cm under compression with 60 MPa.
iii. The dispersion described in the aspect i or ii, in which the metal oxide microparticles are made of at least one selected from the group consisting of tin oxide, indium oxide, zinc oxide, and tungsten oxide.
iv. The dispersion described in any one of the aspects i to iii, in which the metal oxide microparticles are tin-doped indium oxide microparticles.
v. The dispersions described in any one of the aspects i to iv, in which the metal oxide microparticles have a powder resistivity of 1 Ω·cm under compression with 60 MPa.
vi. The dispersion described in any one of the aspects i to v, in which the metal oxide microparticles have an average particle diameter of equal to or less than 30 nm.
vii. The dispersion described in any one of the aspects i to vi, in which the resin binder is a thermoplastic resin or a curable resin.
viii. The dispersion described in any one of the aspects i to vii including a light curable resin as the resin binder and

a photoinitiator as the additive.

ix. The dispersion described in the aspect viii, in which the addition amount of the photoinitiator is 1% to 20% of the light curable resin.

x. The dispersion described in the aspect viii, in which the light curable resin is a (meth)acrylate compound.

xi. The dispersion described in any one of the aspects viii to x, in which the photoinitiator is a radical polymerization photoinitiator.

xii. The dispersion described in any one of the aspects i to xi including a near-infrared-absorbing dye as the additive.

xiii. The dispersion described in the aspect xii, in which the addition amount of the near-infrared-absorbing dye is 1% to 30% of the total amount of the solid content in the dispersion.

xiv. The dispersion described in the aspect xiii, in which the near-infrared-absorbing dye is a porphyrazine dye or a diimmonium dye.

xv. The dispersion described in the aspect xiv, in which the near-infrared-absorbing dye is a porphyrazine dye represented by Formula (1) above.

xvi. The dispersion described in the aspect xv, in which at least one of the rings A, B, C, and D in the porphyrazine dye represented by Formula (1) is a pyridine ring or a naphthalene ring and each of the other rings is independently any one selected from the group consisting of a benzene ring, a pyridine ring, and a naphthalene ring.

xvii. The dispersion described in the aspect xvi, in which the combination of the four rings of the rings A, B, C, and D in the porphyrazine dye represented by Formula (1) above is a combination of a total of 4 rings consisting of 0 to 2 benzene rings and 2 to 4 naphthalene rings or a combination of a total of 4 rings consisting of 1 to 3 pyridine rings and 1 to 3 naphthalene rings.

xviii. The dispersion described in the aspect xvii, in which the rings A to D are a combination of pyridine ring(s) and naphthalene ring(s).

xix. The dispersion described in any one of the aspects xv to xviii, in which the near-infrared-absorbing dye is a porphyrazine dye of Formula (1) with a and b being 0.

xx. The dispersion described in any one of the aspects i to xix, in which the metal oxide microparticles in the dispersion are dispersed so that, when formed into a heat-ray-shielding layer, reflectance of the heat-ray-shielding layer at light wavelengths of at least 2,000 nm will be at least 15% and surface resistivity of the heat-ray-shielding layer will be equal to or more than $10^6$ Ω/□.

xxi. The dispersion described in any one of the aspects i to xx made with a bead mill at a peripheral speed of 6 m/s to 12m/s.

The heat-ray-shielding sheet according to the present invention including the heat-ray-shielding layer according to the preferable aspects of the present invention on a support can be obtained by applying the dispersion described in any one of the aspects i to xxi to the support so that the dispersion will form a film, drying, and then, when the dispersion includes a curable resin as the resin binder, curing the curable resin.

The surface resistivity of the heat-ray-shielding layer in the heat-ray-shielding sheet is equal to or more than $10^6$ Ω/□, preferably equal to or more than $10^7$ Ω/□, more preferably equal to or more than $10^8$ Ω/□, and even more preferably equal to or more than $10^9$ Ω/□. When the surface resistivity is too low, radio waves are hardly transmitted. The reflectance of the heat-ray-shielding layer at light wavelengths of at least 2,000 nm is at least 15%, preferably at least 20%. A too small reflectance at light wavelengths of equal to or more than 2,000 nm not only reduces contribution to heat-ray-shielding by reflection but also causes defects such as rise in sheet surface temperatures because the layer mainly exhibits an absorbing property.

The maximum height difference of the surface of the heat-ray-shielding layer is equal to or less than 70 nm, preferably equal to or less than 60 nm, and more preferably equal to or less than 50 nm. In an even more preferable aspect, the maximum height difference is equal to or less than 40 nm, more preferably equal to or less than 30 nm or equal to or less than 20 nm. The maximum height difference is most preferably equal to or less than 15 nm. When the maximum height difference is too large, incident near-infrared light is scattered on the film surface, and impartation of a good reflecting property is prevented.

The lower limit does not particularly exist, but the commonly achievable lower limit is about 5 nm. In view of easiness of achievement, the lower limit is about 10 nm.

To determine the maximum height difference of the surface of the heat-ray-shielding layer, the maximum height and the minimum height in an arbitrary area of 0.3 mm × 0.3 mm in the entire surface of the heat-ray-shielding layer are determined with a white-light interference surface profiler (Talysurf CCI manufactured by Taylor Hobson Ltd.) with a 50x lens, and the difference between the maximum height and the minimum height in the area is set to be the maximum height difference of the surface of the heat-ray-shielding layer.

Hard studies have been made to obtain a satisfactory near-infrared-reflecting property and surface resistivity (a radio-wave-transmitting property) of the heat-ray-shielding layer, and preferably to obtain a satisfactory low haze value. Surprisingly, the studies have revealed that the object above is achieved by incorporating the microparticles in a

high concentration, dispersing the microparticles in the high concentration in a binder component so that the microparticles will not be agglomerated or coupled and so that the reflecting property of the microparticles will not be impaired, and applying the dispersion to a support so that the dispersion will make an smooth surface to form a film. Such a process can cause the reflectance of the heat-ray-shielding layer at light wavelengths of at least 2,000 nm to be at least 15%, preferably at least 20% and can cause the surface resistivity of the heat-ray-shielding layer to be at least $10^6$ Ω/□, preferably at least $10^7$ Ω/□, more preferably at least $10^8$ Ω/□, and even more preferably at least $10^9$·Ω/□.

The dispersing method is not particularly limited as long as the microparticles are dispersed so that the values above will be achieved. A preferable dispersing method is to carry out the dispersing the microparticles in a specific dispersion energy range with a bead mill. When the dispersion energy is lower than the specific range, impairment of the near-infrared-reflecting property and a high haze value become problems because smoothness of the sheet is impaired, in addition to the problem that the particles are agglomerated to form conductive paths and reduce the surface resistivity. In addition, it has been found that the near-infrared-reflecting property of the microparticles is impaired when the dispersion energy is too high. The cause is not known but is expected to be changes in the microparticles such as formation of scratches on the surface of the microparticles caused by the dispersing process with too high energy. The changes impair the reflecting property. To satisfy the reflectance described above and the surface resistivity described above, the specific dispersion energy range exists, and dispersing the microparticles in the specific energy range is expected to cover each of the microparticles with the binder component, prevent the microparticles from reflocculating or coupling, and disperse the microparticles in the binder component in a matrix-like state, thereby achieving the reflectance described above and the surface resistivity described above when a film is formed.

When a bead mill is used, appropriate examples of the specific energy range include a peripheral speed of 3 to 12 m/s, preferably a peripheral speed of 3 to 11 m/s, and more preferably a peripheral speed of 3 to 10 m/s. The examples include a peripheral speed of 4 to 12 m/s or a peripheral speed of 4 to 11 m/s in an even more preferable aspect, a peripheral speed of 5 to 12 m/s, and, in some cases, a peripheral speed of 5 to 11 m/s or 5 to 10 m/s in the most preferable aspect. As described above, a too low peripheral speed cannot disperse the microparticles sufficiently and a too high peripheral speed impairs the reflecting property and thus impairs the heat-shielding property.

The appropriate range somewhat varies depending on apparatuses to be used, the binder, the solid content in the dispersing process and the like, and the range is preferably adjusted by reference to the above as appropriate.

The method for applying the heat-ray-shielding layer is not particularly limited as long as the method can form the surface smoothly. For example, a comma coater, a spray coater, a roll coater, a knife coater or the like can be used depending on the situation, but use of a coating apparatus suitable for thin-film formation such as a bar coater, a spin coater, a die coater, and a micro gravure coater is preferable for the smoothness of the sheet.

The thickness of the heat-ray-shielding layer containing the microparticles cannot be unconditionally determined because the thickness varies depending on the particle concentration, the binder component and the like and is determined depending on intended performances such as the heat-ray-shielding property and the visible transmittance. In the present invention, the thickness is preferably adjusted so that the visible transmittance of the heat-ray-shielding layer will be at least equal to or more than 70%, more preferably equal to or more than 80%. An adjustment that causes the thickness after drying to be about 0.1 μm to 50 μm is commonly sufficient. The thickness after drying is more preferably about 0.1 μm to 40 μm. When a curable resin is used as the resin binder, an adjustment can be made so that the thickness after drying will be commonly within 0.1 μm to 30μm, preferably about 0.1 μm to 20 μm, and even more preferably 0.1 μm to 10 μm.

The visible transmittance of the heat-ray-shielding layer obtained by the process described above is commonly equal to or more than 50%, preferably equal to or more than 70%, and more preferably equal to or more than 80%. The haze value of the heat-ray-shielding layer is commonly equal to or less than 8%, preferably equal to or less than 5%, more preferably equal to or less than 3%, even more preferably equal to or less than 2%, and most preferably equal to or less than 1%. A lower haze value is more preferable. The haze value in a preferable aspect of the present invention is equal to or less than 0.8% and can be equal to or less than 0.5% in a more preferable aspect. The lower limit of the haze value is not particularly limited but seems to be down to about 0.1%.

The support of the heat-ray-shielding sheet according to the present invention has no problem as long as the support is a transparent thin plate on which the heat-ray-shielding layer can be formed, and may be either an inorganic material or an organic material. The support may be a functional sheet having a property such as the near-infrared-reflecting property. A transparent thin plate that does not impair the light-transmitting property such as a resin sheet and an inorganic glass plate is commonly used. The support is preferably a thin plate having a visible transmittance of at least 90%. The thickness is not particularly limited but is commonly about 50 μm to 3 mm.

The heat-ray-shielding sheet according to the present invention may further include another layer such as, for example, a near-infrared-absorbing layer and a near-infrared-reflecting layer as appropriate in addition to the heat-ray-shielding layer.

Various additives such as, for example, an ultraviolet-absorbing agent, an antioxidant, and a light stabilizer can be added as appropriate to the another layer described above.

A functional sheet such as an adhesive layer and a hardcoat layer may be layered on the heat-ray-shielding layer depending on intended objects.

In the present invention, the near-infrared-absorbing dye can be incorporated in the heat-ray-shielding layer to shield shorter-wavelength near-infrared light (near-infrared light close to visible light; mainly light having wavelengths of 780 nm to 2,000 nm). When the near-infrared-absorbing dye is not incorporated or when the near-infrared-absorbing dye is incorporated and the shorter-wavelength light is intended to be further shielded, it is preferable to dispose a reflecting layer that reflects mainly shorter-wavelength near-infrared light in addition to the heat-ray-shielding layer. The heat-ray-shielding sheet according to the present invention including the reflecting layer will be described below.

A known reflecting layer can be used as the reflecting layer.

Examples of the reflecting layer include a cholesteric-liquid-crystal layer and a dielectric or birefringent multilayer including at least one combination of a high-refractive-index layer and a low-refractive-index layer.

A known material can be used as the material that selectively reflects infrared light. A material that transmits radio waves, in other words, a material having no conductivity is preferable. Examples of such a material that selectively reflects infrared light include a cholesteric (chiral nematic) liquid crystal material, a dielectric multilayer material (hereinafter also referred to as a dielectric multilayer structure material), and a birefringent multilayer material (also referred to as a birefringent multilayer structure material). These materials can be used alone, or two or more of the materials can be used in combination.

The dielectric multilayer structure material (also referred to as the dielectric multilayer material) is constructed by alternately layering a high-refractive-index material layer (hereinafter also referred to as the high-refractive-index layer) and a low-refractive-index material layer (hereinafter also referred to as the low-refractive-index layer). The refractive index of the high-refractive-index layer is preferably about 1.60 to 2.40, more preferably about 1.80 to 2.10. The refractive index of the low-refractive-index layer is about 1.30 to 1.50, preferably about 1.34 to 1.50. These two layers preferably have a difference in the refractive indexes of at least 0.1, preferably at least 0.3, and more preferably at least 0.4.

Each of the optical film thicknesses (the product nd of the refractive index n by the film thickness d) is controlled to be $\lambda_c/4$, where $\lambda_c$ is the center wavelength of the wavelength region of light to be reflected. A material such as titanium oxide, zirconium oxide, cerium oxide, lead oxide, zinc oxide, niobium oxide, tantalum oxide, and hafnium oxide is used as the high-refractive-index material, and a material such as silicon oxide, magnesium fluoride, and cerium fluoride is used as the low-refractive-index material.

The high-refractive-index material layer and the low-refractive-index material layer can be formed by a known method such as sputtering, vacuum evaporation, and spraying (for example, Japanese Patent No. 3397824). A method in which the microparticles in each of the refractive index material layers are dispersed in a matrix and applied is also available. In this case, the particle diameter is preferably equal to or less than 200 nm in consideration of the visible transmittance and the haze value.

To make properties of the dielectric multilayer structure material (dielectric multilayer) highly efficient (highly reflective), it is necessary to increase the number of layers. Increase in the number of layers, however, causes problems such as variations in each film thickness and a rise in the cost of production. The number of layers is therefore preferably equal to or more than 3 and equal to or less than 11.

A preferable aspect can achieve a visible transmittance of equal to or more than 70%, preferably equal to or more than 75%, and even more preferably equal to or more than 80%, a haze value of equal to or less than 2%, preferably equal to or less than 1.5%, even more preferably equal to or less than 1%, and a total solar energy transmittance after passing through the heat-ray-shielding sheet of equal to or less than 70%, preferably equal to or less than 65%, and more preferably equal to or less than 55% in the heat-ray-shielding sheet according to the present invention including the dielectric multilayer without incorporating the near-infrared-absorbing dye in the heat-ray-shielding layer. The heat-ray-shielding layer may include the near-infrared-absorbing dye as appropriate.

In the preferable aspect, the values above are achieved in a case in which the dielectric multilayer is a dielectric multilayer formed by alternately layering materials that causes the difference in refractive indexes between the high-refractive-index layer and the low-refractive-index layer to be at least 0.3, more preferably at least 0.4, to achieve the target values above, and, in a more preferable handling, in a case in which the dielectric multilayer is formed by alternately layering 3 to 11 layers of the high-refractive-index layer containing titanium oxide and the low-refractive-index layer containing silicon oxide to achieve the target values above.

The cholesteric-liquid-crystal material has a structure in which molecular axes are arranged in a specific direction in a single plane, the direction of the molecular axes shifts by a small angle in the next plane, and the angle further shifts in the plane next to the second plane above. In this way, the angle of the molecular axes gradually shifts around the normal direction of the plane. Such a structure in which the direction of molecular axes twists is called a chiral structure. Preferably, the normal (the chiral axis) of the plane is approximately parallel to the thickness direction of the cholesteric-liquid-crystal layer.

When light enters the cholesteric-liquid-crystal material, left-handed or right-handed circularly polarized light in a specific wavelength region is reflected. When the chiral structure has a screw axis representing the rotation axis

around which the molecular axes twist parallel to the normal of the cholesteric-liquid-crystal material, the pitch length p of the chiral structure and the wavelength $\lambda_c$ of the circularly polarized light to be reflected satisfy the relations of Equation (a) and Equation (b) below:

Equation (a)

$$\lambda_c = n \times p \times \cos\theta$$

Equation (b)

$$n_o \times p \times \cos\theta \leq \lambda \leq n_e \times p \times \cos\theta$$

In Equation (a) and Equation (b), $\lambda_c$ represents the center wavelength of the wavelength region to be reflected, $n_o$ represents the refractive index of the liquid crystal compound in the minor axis direction, $n_e$ represents the refractive index of the liquid crystal compound in the major axis direction, n represents $(n_o + n_e)/2$, and $\theta$ represents an incidence angle of light (an angle from the plane normal).

The center wavelength of the wavelength region to be reflected therefore depends on the pitch length of the chiral structure in the cholesteric-liquid-crystal material. The center wavelength to be reflected can be changed by changing this pitch length of the chiral structure.

The number of layers of the cholesteric-liquid-crystal material may be one or may be two or more. The number of layers of equal to or more than two is preferable because the near-infrared wavelength band that can be reflected can be broadened.

When two or more layers of the cholesteric-liquid-crystal material are used, a combination of cholesteric-liquid-crystal layers having different twisting directions of the molecular axes is preferable to more efficiently reflect the center wavelength region to be reflected. In other words, the combination enables reflection of both the right-handed circularly polarized light and the left-handed circularly polarized light, thereby achieving an effective reflectance. A combination of cholesteric-liquid-crystal layers having different pitch lengths is preferable to broaden the wavelength region to be reflected when two or more layers of the cholesteric-liquid-crystal material are used. In addition, a combination of cholesteric-liquid-crystal layers having different twisting directions enables highly efficient reflection of a broad near-infrared wavelength region. An appropriate combination of the number of layer, the right-handed circularly-polarizing and left-handed circularly-polarizing cholesteric-liquid-crystal layers and the like can be used in consideration of the cost of production, the visible transmittance and the like.

Use of a curable liquid crystal composition (also referred to as a polymerizable liquid crystal composition) is preferable for forming the cholesteric-liquid-crystal material (also referred to as the cholesteric-liquid-crystal layer). An example of the liquid crystal composition contains at least a polymerizable liquid crystal compound (preferably a polymerizable rod-like liquid crystal compound), an optically active compound (a chiral compound), and a polymerization initiator. The example may include two or more of each of the components. For example, the polymerizable liquid crystal compound and a nonpolymerizable liquid crystal compound can be used in combination. A low-molecular-weight liquid crystal compound and a high-molecular-weight liquid crystal compound can be used in combination. In addition, the example may contain at least one selected from various additives such as horizontal orientation, an ununiformity preventing agent, a cissing inhibitor, and a polymerizable monomer to improve uniformity of the orientation, coating suitability, and film strength. In addition, a polymerization inhibitor, an antioxidant, an ultraviolet-absorbing agent, a light stabilizer, a coloring material, metal oxide microparticles and the like can be further added to the liquid crystal composition as appropriate within the range of not impairing optical properties.

(1) Rod-like Liquid Crystal Compound

The calamitic liquid crystal compound used in the present invention is a rod-like nematic liquid crystal compound. Preferable examples of the rod-like nematic liquid crystal compound include a low-molecular-weight liquid crystal compound such as a azomethine, a azoxy compound, a cyanobiphenyl, a cyanophenyl ester, a benzoate ester, a cyclohexanecarboxylic acid phenyl ester, a cyanophenylcyclohexane, a cyano-substituted phenylpyrimidine, a phenyldioxane, a tolane, and an alkenylcyclohexylbenzonitrile and a high-molecular-weight liquid crystal compound.

The rod-like liquid crystal compound used in the present invention may be polymerizable or nonpolymerizable. The compound is preferably the polymerizable rod-like liquid crystal compound.

Various documents (for example, Y. Goto et al., Mol. Cryst. Liq. Cryst. 1995, Vol. 260, pp. 23-28) refer to a rod-like liquid crystal compound having no polymerizable group.

The polymerizable rod-like liquid crystal compound can be obtained by introducing a polymerizable group to the rod-like liquid crystal compound. Examples of the polymerizable group include an unsaturated polymerizable group, an epoxy group, and an aziridinyl group. The unsaturated polymerizable group is preferable, and an ethylenically unsaturated polymerizable group is particularly preferable. The polymerizable group can be introduced into molecules of the rod-like liquid crystal compound by various methods. The number of polymerizable groups in the polymerizable rod-like liquid crystal compound is preferably 1 to 6, more preferably 1 to 3. Examples of the polymerizable rod-like liquid crystal compound include compounds disclosed in documents such as Makromol. Chem., Vol. 190, p. 2255 (1989), Advanced Materials Vol. 5, p. 107 (1993), U.S. Patent No. 4,683,327, U.S. Patent No. 5,622,648, U.S. Patent No. 5,770,107, WO 95/22586, WO 95/24455, WO 97/00600, WO 98/23580, WO 98/52905, Japanese Unexamined Patent Application Publication No. H01-272551, Japanese Unexamined Patent Application Publication No. H06-16616, Japanese Unexamined Patent Application Publication No. H07-110469, Japanese Unexamined Patent Application Publication No. H11-80081, and Japanese Unexamined Patent Application Publication No. 2001-328973. Two or more of the polymerizable rod-like liquid crystal compounds may be used in combination. A combination of two or more of the polymerizable rod-like liquid crystal compounds can decrease the orientation temperature.

(2) Optically Active Compound (Chiral Agent)

The liquid crystal composition exhibits a cholesteric liquid crystal phase and preferably contains the optically active compound to exhibit the phase. When the rod-like liquid crystal compound is molecules having asymmetric carbon atoms, the rod-like liquid crystal compound may be able to stably form the cholesteric liquid crystal phase without adding the optically active compound in some cases. The optically active compound can be selected from various known chiral agents (for example, disclosed in Ekisho Device Handbook, Chapter 3, Section 4-3, Chiral Agents for TN and STN, p. 199, edited by 142nd Committee of Japan Society for the Promotion of Science, 1989). The optically active compound commonly has an asymmetric carbon atom, but an axially chiral compound or a planar chiral compound having no asymmetric carbon atom can be used as the chiral agent. Examples of the axially chiral compound or the planar chiral compound include a binaphthyl, a helicene, a paracyclophane and derivatives of these compounds. The optically active compound (the chiral agent) may have a polymerizable group. When the optically active compound has a polymerizable group and the rod-like liquid crystal compound to be used in combination also has a polymerizable group, a polymerization reaction of the polymerizable optically active compound and the polymerizable rod-like liquid crystal compound can form a polymer having a repeating unit derived from the rod-like liquid crystal compound and a repeating unit derived from the optically active compound. In this aspect, the polymerizable group in the polymerizable optically active compound is preferably the same as the polymerizable group in the polymerizable rod-like liquid crystal compound. Therefore, the polymerizable group of the optically active compound is also preferably an unsaturated polymerizable group, an epoxy group, or an aziridinyl group, more preferably an unsaturated polymerizable group, particularly preferably the ethylenically unsaturated polymerizable group.

The optically active compound may be a liquid crystal compound.

The optically active compound in the liquid crystal composition is preferably 0.1 to 30 mol% of the liquid crystal compound to be used in combination. The amount to be used of the optically active compound is preferably small because a smaller amount of the compound tends to have no effect on liquid crystallinity. The optically active compound used as the chiral agent is therefore preferably a compound having strong twisting power to achieve with a small amount a twisted orientation with a desired screw pitch. Examples of such a chiral agent exhibiting strong twisting power include a chiral agent disclosed in Japanese Unexamined Patent Application Publication No. 2003-287623, which can be preferably used in the present invention.

(3) Polymerization Initiator

The liquid crystal composition used for forming the light-reflecting layer is preferably the polymerizable liquid crystal composition, and therefore preferably contains the polymerization initiator. The polymerization initiator to be used is preferably a photopolymerization initiator that can start polymerization reaction with irradiation of ultraviolet light because a curing reaction in the present invention proceeds with irradiation of ultraviolet light. The photopolymerization initiator is not particularly limited, and examples of the photopolymerization initiator include an acetophenone compound such as 2-methyl-1-[4-(methylthio)phenyl]-2-morpholinopropan-1-one ("IRGACURE (registered trademark) (the same applies hereinafter) 907" manufactured by Ciba Specialty Chemicals Inc.), 1-hydroxycyclohexylphenyl ketone ("IRGACURE 184" manufactured by Ciba Specialty Chemicals Inc.), 4-(2-hydroxyethoxy)-phenyl(2-hydroxy-2-propyl) ketone

("IRGACURE 2959" manufactured by Ciba Specialty Chemicals Inc.), 1-(4-dodecylphenyl)-2-hydroxy-2-methylpropan-1-one ("DAROCUR (registered trademark) (the same applies hereinafter) 953" manufactured by Merck KGaA), 1-(4-isopropylphenyl)-2-hydroxy-2-methylpropan-1-one ("DAROCUR 1116" manufactured by Merck KGaA), 2-hydroxy-2-methyl-1-phenylpropan-1-one ("IRGACURE 1173" manufactured by Ciba Specialty Chemicals Inc.), and diethoxyacetophenone, a benzoin compound such as benzoin, benzoin methyl ether, benzoin ethyl ether, benzoin isopropyl ether, benzoin isobutyl ether, and 2,2-dimethoxy-2-phenylacetophenone ("IRGACURE 651" manufactured by Ciba Specialty Chemicals Inc.), a benzophenone compound such as benzoylbenzoic acid, benzoylbenzoic acid methyl, 4-phenylbenzophenone, hydroxybenzophenone, 4-benzoyl-4'-methyldiphenyl sulfide, and 3,3'-dimethyl-4-methoxybenzophenone ("KAYACURE (registered trademark) (the same applies hereinafter) MBP" manufactured by Nippon Kayaku Co., Ltd.), and a thioxanthone compound such as thioxanthone, 2-chlorothioxanthone ("KAYACURE CTX" manufactured by Nippon Kayaku Co., Ltd.), 2-methylthioxanthone, 2,4-dimethylthioxanthone ("KAYACURE RTX" manufactured by Nippon Kayaku Co., Ltd.), isopropylthioxanthone, 2,4-dichlorothioxanthone ("KAYACURE CTX" manufactured by Nippon Kayaku Co., Ltd.), 2,4-diethylthioxanthone ("KAYACURE DETX" manufactured by Nippon Kayaku Co., Ltd.), and 2,4-diisopropylthioxanthone ("KAYACURE DITX" manufactured by Nippon Kayaku Co., Ltd.). These photopolymerization initiators may be used alone, or two or more of the initiators may be used in combination.

The content of the photopolymerization initiator in the composition is not particularly limited. The content has a preferable lower limit of 0.5 parts by weight, a preferable upper limit of equal to or less than 10 parts by weight, a more preferable lower limit of 2 parts by weight, and a more preferable upper limit of 8 parts by weight to 100 parts by weight of the polymerizable liquid crystal compound or a (meth)acrylate monomer composition.

The photopolymerization initiator is preferably used in combination with a reaction promoter to facilitate a photopolymerization reaction when the benzophenone compound or the thioxanthone compound is used as the photopolymerization initiator. The reaction promoter is not particularly limited, and examples of the reaction promoter include an amine compound such as triethanolamine, methyldiethanolamine, triisopropanolamine, n-butylamine, N-methyldiethanolamine, diethylaminoethyl methacrylate, Michler's ketone, 4,4'-diethylaminophenone, ethyl 4-dimethylaminobenzoate, (n-butoxy)ethyl 4-dimethylaminobenzoate, and isoamyl 4-dimethylaminobenzoate.

The content of the reaction promoter in the polymerizable liquid crystal composition is not particularly limited but is preferably in a range where the reaction promoter has no effect on liquid crystallinity of the polymerizable liquid crystal composition. A preferable lower limit is 0.5 parts by weight, a preferable upper limit is equal to or less than 10 parts by weight, a more preferable lower limit is 2 parts by weight, and a more preferable upper limit is 8 parts by weight to a total of 100 parts by weight of the sum of the polymerizable liquid crystal compound and an ultraviolet-curable polymerizable compound.

The content of the reaction promoter is preferably a half to twice the amount of the content of the photopolymerization initiator.

The method for applying the cholesteric-liquid-crystal layer is not particularly limited, and examples of the method include a comma coater, a spray coater, a roll coater, and a knife coater. Use of a coating apparatus suitable for thin-film formation such as a bar coater, a spin coater, a die coater, and a micro gravure coater is preferable for the smoothness of the surface of the particle-containing layer. The surface of a layer (such as a particle layer and the substrate) to which the cholesteric-liquid-crystal layer is applied may be oriented to regulate the orientation direction of the liquid crystal compound in the cholesteric-liquid-crystal layer more precisely. To achieve the orientation, rubbing treatment of the surface of the substrate to form an orientation surface is preferable.

At least one cholesteric-liquid-crystal layer is sufficient, but a plurality of cholesteric-liquid-crystal layers are commonly preferable. At least two, preferably about 2 to 8 layers are commonly preferable. Any combination of the cholesteric-liquid-crystal layers is possible. For example, the combination may be at least one of a combination of at least two kinds of cholesteric-liquid-crystal layers having different twisting directions of molecular axes and a combination of cholesteric-liquid-crystal layers having different pitch lengths.

A preferable aspect of the heat-ray-shielding sheet according to the present invention including the cholesteric-liquid-crystal layer is an aspect in which the sheet includes at least 1, preferably at least 2, and more preferably 2 to 8 cholesteric-liquid-crystal layers on a support and the heat-ray-shielding layer on the liquid crystal layer. In a more preferable aspect, the cholesteric-liquid-crystal layer includes a polymer layer of the polymerizable liquid crystal composition (preferably a photopolymerizable liquid crystal composition, more preferably a photopolymerizable liquid crystal composition including a photopolymerizable rod-like liquid crystal compound, or a photopolymerizable liquid crystal composition including a photopolymerizable rod-like liquid crystal compound and a chiral agent).

The heat-ray-shielding layer may be an aspect including no near-infrared-absorbing dye or an aspect including the dye.

The preferable aspect of the heat-ray-shielding sheet according to the present invention including the cholesteric-liquid-crystal layer can cause the visible transmittance to be equal to or more than 70%, preferably equal to or more than 75%, the haze value to be equal to or less than 2%, preferably equal to or less than 1.5%, and more preferably equal to or less than 1%, and the total solar energy transmittance described later to be equal to or less than 65%, more

preferably equal to or less than 60%. In particular, when a heat-ray-shielding layer including the near-infrared absorbing-dye is used as the heat-ray-shielding layer, the visible transmittance can be the preferable or the more preferable values above, and the total solar energy transmittance can be equal to or less than 60%, preferably equal to or less than 55%, and equal to or less than 50% in the most preferable aspect. In this case, the near-infrared-absorbing dye is preferably one of the preferable porphyrazine dyes described above, more preferably one of the preferable or the more preferable porphyrazine dyes described above.

The birefringent multilayer structure material includes alternating layers of a birefringent (preferably positively birefringent) layer (hereinafter, a birefringent layer) and an isorefractive or negatively birefringent layer (hereinafter, an isorefractive layer) and is supported on coherent interference caused by the difference in refractive indexes between the birefringent layer and the isorefractive layer and film thicknesses of each layer. When in-plane refractive indexes differ between the birefringent layer and the isorefractive layer, the boundary surface between the two layers forms a reflection surface.

The term "birefringent" means that not all the refractive indexes in orthogonal x, y, and z directions are necessarily the same. When the x axis and the y axis are in the plane of a layer, the z axis is perpendicular to the plane of the layer, and an oriented polymer is used, the x axis is set to be the in-plane direction in which the maximum refractive index exists, and the x direction corresponds to one of directions in which an optical body is oriented (for example, stretched).

Both in-plane refractive indexes of the birefringent layer and the isorefractive layer differ between the layers (in other words, $n_{1x} \neq n_{2x}$ and $n_{1y} \neq n_{2y}$, where $n_{1x}$ and $n_{1y}$ are the in-plane refractive indexes of the birefringent layer, and $n_{2x}$ and $n_{2y}$ are the in-plane refractive indexes of the isorefractive layer). The z-axis refractive indexes of the birefringent layer and the isorefractive layer are preferably equivalent because reflection of p-polarized light does not depend on the incidence angle of light in this case, which offers uniform reflectance across the region of a visual angle.

Use of a uniaxially oriented, preferably biaxially oriented birefringent polymer (preferably a positively birefringent polymer) to increase the in-plane refractive indexes of the birefringent layer increases the difference in the refractive indexes between the birefringent layer and the isorefractive layer.

The optical film thickness of each layer is controlled to be $\lambda_c/4$, where $\lambda_c$ is the center wavelength of the wavelength region to be reflected. A material that is oriented (and becomes positively birefringent) by stretching is used as the birefringent layer material. Polyethylene naphthalate (PEN), PET or the like is used, for example. A material that is not oriented by stretching (or a material that becomes negatively birefringent by stretching) is used as the isorefractive material. For example, poly(methyl methacrylate) (PMMA) or the like is used as the isorefractive material. The birefringent multilayer structure material can be produced by forming a multilayer film by a simultaneous co-extrusion method disclosed in Japanese Translation of PCT International Application Publication No. JP-T-2008-528313, and then stretching the multilayer film, for example. Layering of a plurality of layers is necessary because the difference in the refractive indexes between the birefringent layer and the isorefractive layer is small. The number of layers is preferably equal to or more than 3 and equal to or less than 1,000 in consideration of the reflection region to be reflected, the cost of production and the like.

The layering sequence of the reflecting layer and the heat-ray-shielding layer is not particularly limited. For example, the heat-ray-shielding layer may be layered between the support and the reflecting layer. The heat-ray-shielding layer, the reflecting layer, and the support may be layered in this order from the incidence direction of heat rays. When the reflecting layer itself can be used as the support, the reflecting layer may be the support in some cases. Layering the heat-ray-shielding layer, the reflecting layer, and the support in this order from the incidence direction of heat rays is commonly more preferable.

The dielectric multilayer or the cholesteric-liquid-crystal layer is more preferable as the reflecting layer.

The visible transmittance of the heat-ray-shielding sheet according to the present invention including both of the heat-ray-shielding layer and the reflecting layer is equal to or more than 50%, preferably equal to or more than 70%. In addition, it is necessary not to cause the haze value of the heat-ray-shielding sheet to impair the transparency. A haze value of equal to or less than 8% is good, equal to or less than 3% is preferable, and equal to or less than 1% is more preferable. The total solar energy transmittance (Tts) of the heat-ray-shielding sheet according to the present invention including both of the heat-ray-shielding layer and the reflecting layer is preferably equal to or less than 70%, more preferably equal to or less than 60%, even more preferably equal to or less than 55%, and equal to or less than 50% in the most preferable aspect.

In the heat-ray-shielding sheet, various additives such as an ultraviolet-absorbing agent, an antioxidant, and a light stabilizer, for example, can be added to the heat-ray-shielding layer or the reflecting layer as appropriate. The sheet may include another layer such as an ultraviolet-absorbing layer including the ultraviolet-absorbing agent and the dye layer including the near-infrared dye as appropriate in addition to the heat-ray-shielding layer or the reflecting layer. An aspect including both of the heat-ray-shielding layer and the reflecting layer is commonly preferable. In addition, a heat-ray-shielding layered sheet may be formed by layering functional sheets such as an adhesive layer and a hardcoat layer on the heat-ray-shielding sheet depending on intended objects.

The heat-ray-shielding sheet according to the present invention may be a heat-ray-shielding layered sheet in

which the dye layer including the near-infrared-absorbing dye is further layered in addition to the heat-ray-shielding layer as appropriate. The porphyrazine compound and the diimmonium compound are preferable as the near-infrared-absorbing dye. In addition, the particle layer, a layer including a combination of materials that selectively reflect infrared light, and the near-infrared-absorbing dye may be used in combination as appropriate. Commercially available materials that selectively reflect infrared light (dielectric multilayer structure materials, cholesteric-liquid-crystal materials, and birefringent multilayer structure materials) may be used as long as the materials satisfy the properties described above (the heat-shielding property, the radio-wave-transmitting property, the haze property, the visible transmittance and the like).

[Examples]

The present invention will be described below in further detail with examples. In the examples, "part" means "part by weight", and "%" means "wt%".

Example 1

To 7 parts of toluene, 1.4 parts of tin-doped indium oxide (product name: ITO-R, manufactured by CIK NanoTek Corporation) (hereinafter, referred to as ITO) having an average particle diameter of 25.6 nm and a powder resistivity of 0.8 Ω·cm, 0.1 parts of KAYARAD DPHA (product name, dipentaerythritol hexaacrylate, manufactured by Nippon Kayaku Co., Ltd.), 0.01 parts of IRGACURE 184 (a radical photopolymerization initiator, manufactured by BASF Japan Ltd.), and 0.1 parts of an aminoalkyl methacrylate copolymer dispersant (product name: DISPERBYK-140, manufactured by BYK Japan K.K.) were added, and a dispersion was prepared by a dispersing process with a bead mill at a peripheral speed of 10 m/s. The prepared dispersion was applied to a poly(ethylene terephthalate) (PET) sheet (a substrate) (thickness of 100 μm) with a wire bar so that the thickness after drying would be 500 nm, dried at 100°C for 2 minutes to evaporate toluene, and then irradiated with UV to produce a heat-ray-shielding sheet.

An adhesive agent was applied to the produced heat-ray-shielding sheet to form an adhesive sheet, which was then laminated to a piece of 3-mm clear glass to produce a piece of heat-ray-shielding glass.

Example 2

A heat-ray-shielding sheet was produced in the same way as in Example 1 except that the amount of KAYARAD DPHA was changed to 0.3 parts.

Example 3

A heat-ray-shielding sheet was produced in the same way as in Example 1 except that the peripheral speed of the bead mill was changed to 5 m/s.

Example 4

To 30 parts of a xylene, 20 parts of toluene, and 10 parts of ethanol, 28 parts of ITO and 12 parts of an acrylic copolymer resin (DIANAL resin BR-116 manufactured by Mitsubishi Chemical Corporation) were added, and a dispersion was prepared by a dispersing process with a bead mill at a peripheral speed of 10 m/s. The prepared dispersion was applied to a PET substrate with a wire bar so that the thickness after drying would be 500 nm and dried at 140°C for 2 minutes to produce a heat-ray-shielding sheet.

Comparative Example 1

To find differences in the reflectance, the haze value and the like caused by variations in how ITO was dispersed, a heat-ray-shielding sheet was produced in a similar way to Example 1 in which the ITO concentration and the like were identical to the concentration and the like in Example 1 and only the peripheral speed of the bead mill was changed to 2 m/s.

Comparative Example 2

To find differences in performances caused by variations in the ITO concentration, a heat-ray-shielding sheet was produced in the same way as in Example 1 except that the amount of KAYARAD DPHA was changed to 1.3 parts.

A piece of heat-ray-shielding glass was also produced in the same way as in Example 1 by applying an adhesive agent to the produced heat-ray-shielding sheet to form an adhesive sheet and then laminating the adhesive sheet on a

piece of 3-mm clear glass.

Comparative Example 3

To examine effects of a dispersing process with high energy, a heat-ray-shielding sheet was produced in the same way as in Example 2 except that the peripheral speed of the bead mill was changed to 14 m/s.

Table 2 and Table 3 list results of measurements of the visible transmittance, the near-infrared reflectance, the haze values, the surface resistivity, the maximum height differences of the surface of layers, and the heat-shielding effects of the heat-ray-shielding sheets in Examples 1 to 4 and Comparative Examples 1 to 3.

(Measurement of Visible Transmittance)

The visible transmittance at wavelengths of 380 nm to 780 nm of the obtained heat-ray-shielding sheet was measured with a spectrophotometer (UV-3100 manufactured by Shimadzu Corporation) in accordance with JIS R 3106.

(Measurement of Near-Infrared Reflectance)

The regular reflectance at 300 nm to 2,500 nm of the obtained heat-ray-shielding sheet was measured with a spectrophotometer (UV-3100 manufactured by Shimadzu Corporation) in accordance with JIS R 3106.

(Measurement of Haze Value)

The haze value of the obtained heat-ray-shielding sheet was measured with a haze meter (TC-HIIIDPK manufactured by Tokyo Denshoku Co., Ltd.) in accordance with JIS K 6714.

(Measurement of Surface Resistivity)

The surface resistivity was measured with a surface resistivity meter (Hiresta UP and Loresta GP manufactured by Mitsubishi Chemical Analytech Co., Ltd.).

(Maximum Height Difference of Surface of Layer)

The difference between the maximum height and the minimum height in an area of 0.3 mm × 0.3 mm was measured with a white-light interference surface profiler (Talysurf CCI manufactured by Taylor Hobson Ltd.) with a 50x lens.

(Heat-Shielding Effect)

Test Environment:

Test environment: An infrared lamp (100 V, 250 W: manufactured by Toshiba Corporation) was placed at a position that was outside of the central portion of the ceiling of a test box and that was 40 cm distant in height from the ceiling portion of the test box. The test box had an inner diameter width of 150 mm × a length of 235 mm × a height of 110 mm and had an outside-temperature-shielding property and airtightness. The ceiling portion was transparent glass. The produced piece of heat-ray-shielding glass was then placed inside the ceiling portion of the test box so that the glass surface would face the infrared lamp and was secured by taping the four sides. Thermometers were placed at the central portion inside the test box and on the heat-ray-shielding glass surface inside the box so that the thermometers would not be directly irradiated with light from the lamp. The lamp was then turned on to irradiate the piece of heat-ray-shielding glass with infrared light. The temperatures were measured every 10 seconds, and the temperature after 60 minutes in the test box was measured. The test box was placed in a room of about 25°C.

If comparison of the in-box temperatures in the case where the piece of heat-ray-shielding glass produced in Comparative Example 2 was used and the in-box temperatures in the case where the piece of heat-ray-shielding glass produced in Example 1 was used in this test leads to the result that each of the in-box temperature and the sheet surface temperature is lower when the piece of heat-ray-shielding glass according to the present invention is used, the result indicates improvement of the heat-ray-shielding effect.

The in-box temperature difference is calculated by subtracting each of the in-box temperature and the surface temperature when the piece of heat-ray-shielding glass of Comparative Example 2 was used from each of the in-box temperature and the surface temperature when the piece of heat-ray-shielding glass produced in Example 1 was used.

Examples 1 to 4 satisfy all the requirements of the present invention, but Comparative Example 1 lacks the surface resistivity because the dispersing process is not sufficient and the microparticles are coupled to each other. In addition, near-infrared reflectance is less than 15% because the film surface is not smooth.

In Comparative Example 2, the near-infrared-reflecting property deriving from plasma oscillations of the heat-shielding microparticles is not exhibited because the large amount of resin binder increases the distance between the particles. The heat-shielding effect measurement indicates the result that the heat-ray-shielding sheet according to the present invention has an equivalent visible transmittance to the visible transmittance of the comparative examples while curbing the rise in the in-box temperature and the glass surface temperature. The result indicates improvement of the heat-shielding effect.

Comparative Example 3 satisfies requirements of surface resistivity and the like, but the near-infrared-reflecting property is not exhibited because the too high dispersion energy damaged the surface of the heat-shielding microparticles.

Table 2

| | Visible transmittance | Haze | Reflectance at 2,000 nm | Reflectance at 2,300 nm | Surface resistivity | Maximum height difference of layer surface |
|---|---|---|---|---|---|---|
| Example 1 | 82.40% | 0.30% | 33.20% | 34.70% | $1 \times 10^{10}$ Ω/□ | 12.8 nm |
| Example 2 | 88.20% | 0.50% | 17.80% | 18.30% | $2 \times 10^{12}$ Ω/□ | 10.5 nm |
| Example 3 | 88.10% | 0.60% | 27.64% | 31.00% | $4 \times 10^{9}$ Ω/□ | 14.4 nm |
| Example 4 | 88.70% | 0.50% | 16.10% | 17.10% | $2 \times 10^{12}$ Ω/□ | 10.2 nm |
| Comparative Example 1 | 87.30% | 6.70% | 12.10% | 13.20% | $1 \times 10^{5}$ Ω/□ | 79.4 nm |
| Comparative Example 2 | 82.80% | 0.50% | 3.50% | 4.40% | $1 \times 10^{12}$ Ω/□ | 21.0 nm |
| Comparative Example 3 | 89.00% | 0.90% | 3.00% | 4.60% | $6 \times 10^{12}$ Ω/□ | 16.8 nm |

Table 3

| | In-box temperature | Δ | Glass surface temperature | Δ |
|---|---|---|---|---|
| Example 1 | 69.3°C | -2.6°C | 70.6°C | -3.2°C |
| Comparative Example 2 | 71.9°C | - | 73.8°C | - |

Synthesis Example 1 (Synthesis of Near-Infrared-Absorbing Dye)

To 120 parts of sulfolane, 15.9 parts of naphthalic acid anhydride, 29 parts of urea, 0.40 parts of ammonium molybdate, and 3.5 parts of vanadyl(V) chloride were added. The resulting mixture was heated to 200°C and was allowed to react at this temperature for 11 hours. After the reaction ceased, the mixture was cooled to 65°C, and 100 parts of N,N-dimethylformamide (DMF) was added to the mixture. The precipitated solid was separated by filtration. The obtained solid was washed with 50 parts of DMF, and 20.3 parts of a wet cake was obtained. The obtained wet cake was added to 100 parts of DMF, and the resulting mixture was heated to 80°C and was stirred at this temperature for 2 hours. The precipitated solid was separated by filtration and was washed with 200 parts of water, and 18.9 parts of a wet cake was obtained. The obtained wet cake was added to 150 parts of water, and the resulting mixture was heated to 90°C and was stirred at this temperature for 2 hours. The precipitated solid was separated by filtration and was washed with 200 parts of water, and 16.1 parts of a wet cake was obtained. The obtained wet cake was dried at 80°C, and 12.3 parts of the compound No. 25 in Table 1 was obtained.

Synthesis Example 2 (Synthesis of Near-Infrared-Absorbing Dye)

The compound No. 1 in Table 1 was obtained in an amount of 12.3 parts in the same way as in Synthesis Example 1 except that the amount of naphthalic acid anhydride was changed from 15.9 parts in Synthesis Example 1 to 11.9 parts and that 3.0 parts of phthalic acid anhydride was added.

Synthesis Example 3 (Synthesis of Near-Infrared-Absorbing Dye)

The compound No. 2 in Table 1 was obtained in an amount of 12.1 parts in the same way as in Synthesis Example 2 except that the amount of phthalic acid anhydride was changed from 3.0 parts in Synthesis Example 2 to 5.9 parts and that the amount of naphthalic acid anhydride was changed from 11.9 parts to 7.9 parts.

Synthesis Example 4 (Synthesis of Near-Infrared-Absorbing Dye)

To 120 parts of sulfolane, 3.3 parts of 3,4-pyridinedicarboxylic acid, 7.9 parts of naphthalic acid anhydride, 29 parts of urea, 0.40 parts of ammonium molybdate, and 3.5 parts of vanadyl(V) chloride were added. The resulting mixture was heated to 200°C and was allowed to react at this temperature for 11 hours. After the reaction ceased, the mixture was cooled to 65°C, and 100 parts of N,N-dimethylformamide (DMF) was added to the mixture. The precipitated solid was separated by filtration. The obtained solid was washed with 200 parts of DMF having a temperature of 80°C, and 20.3 parts of a wet cake was obtained. The obtained wet cake was added to 100 parts of DMF, and the resulting mixture was heated to 80°C and was stirred at this temperature for 2 hours. The precipitated solid was separated by filtration and was washed with 200 parts of water, and 40.1 parts of a wet cake was obtained. The obtained wet cake was added to 150 parts of water, and the resulting mixture was heated to 90°C and was stirred at this temperature for 2 hours. The precipitated solid was separated by filtration and was washed with 7.9 parts of water, and 35.2 parts of a wet cake was obtained. The obtained wet cake was dried at 80°C, and 10.8 parts of the compound No. 9 in Table 1 was obtained.

Synthesis Example 5 (Synthesis of Near-Infrared-Absorbing Dye)

The compound No. 8 in Table 1 was obtained in an amount of 11.4 parts in the same way as in Synthesis Example 4 except that the amount of 3,4-pyridinedicarboxylic acid was changed from 3.3 parts in Synthesis Example 4 to 6.7 parts and that the amount of naphthalic acid anhydride was changed from 11.9 parts to 7.9 parts.

Synthesis Example 6 (Synthesis of Near-Infrared-Absorbing Dye)

To 40 parts of a polyphosphate (116%), 3.4 parts of the compound No. 1 obtained in Synthesis Example 2, 4.9 parts of phthalimide, and 1.0 parts of paraformaldehyde were added. The resulting mixture was heated to 140°C and was allowed to react at this temperature for 6 hours. After the reaction ceased, the mixture was cooled to 60°C, and 100 parts of water was added to the mixture. The precipitated solid was separated by filtration and was washed with water, and 34.0 parts of a wet cake was obtained.

The obtained wet cake was added to 100 parts of a 10% potassium hydroxide aqueous solution, and the resulting mixture was allowed to react at 50°C for 2 hours. The precipitated solid was separated by filtration and was washed with water, and 29 parts of a wet cake was obtained.

The obtained wet cake was added to 100 parts of DMF, and the resulting mixture was allowed to react at 25°C. The precipitated solid was separated by filtration and was washed with water, and 13.3 parts of a wet cake was obtained. The obtained wet cake was dried at 80°C, and 6.5 parts of the compound No. 3 in Table 1 was obtained.

Example 5

To 7 parts of toluene, 1.4 parts of tin-doped indium oxide (hereinafter, ITO) described in Example 1, 0.1 parts of the compound (a near-infrared-absorbing dye) obtained in Synthesis Example 1, 0.1 parts of KAYARAD DPHA (product name, dipentaerythritol hexaacrylate, manufactured by Nippon Kayaku Co., Ltd.), 0.01 parts of IRGACURE 184 (a photopolymerization initiator, manufactured by BASF Japan Ltd.), and 0.1 parts of an aminoalkyl methacrylate copolymer dispersant were added, and a dispersion was prepared by a dispersing process with a bead mill at a peripheral speed of 10 m/s. The prepared dispersion was applied to a PET substrate (COSMOSHINE A4100, manufactured by Toyobo Co., Ltd.) with a wire bar, dried at 100°C for 2 minutes to evaporate toluene, and then irradiated with UV to produce a heat-ray-shielding sheet. The total solar energy transmittance (Tts) described below of the heat-ray-shielding sheet was 53.5%.

An adhesive agent (COPONYL N-2147, manufactured by The Nippon Synthetic Chemical Industry Co., Ltd.)

was applied to the produced heat-ray-shielding sheet to form an adhesive sheet, which was then laminated to a piece of 3-mm clear glass to produce a piece of heat-ray-shielding glass according to the present invention.

Examples 6 to 9

The heat-ray-shielding sheets according to the present invention each including one of the compounds obtained in Synthesis Examples 2 to 5 (the sheets are respectively referred to as Examples 6 to 9 in this order) were produced in the same way as in Example 5 except that the dye in Example 5 was changed to each of the compounds obtained in Synthesis Examples 2 to 5.

Example 10

The heat-ray-shielding sheet according to the present invention was produced in the same way as in Example 5 except that the amount of KAYARAD DPHA was changed to 0.3 parts.

Example 11

The heat-ray-shielding sheet according to the present invention was produced in the same way as in Example 5 except that the peripheral speed of the bead mill was changed to 5 m/s. The total solar energy transmittance (Tts) described below of the obtained heat-ray-shielding sheet was 55.1%.

Example 12

(Production of Cholesteric-Liquid-Crystal Layered Product)

In 25 parts cf cyclopentanone, 10 parts of LC-242 (a photopolymerizable liquid crystal compound, manufactured by BASF SE), 0.30 parts of LC-756 (a chiral agent, manufactured by BASF SE), and 0.51 parts of Lucirin TPO (a photopolymerization initiator, manufactured by BASF SE) were dissolved to prepare Application Liquid 1. In 25 parts of cyclopentanone, 10 parts of LC-242 (a photopolymerizable liquid crystal compound, manufactured by BASF SE), 0.26 parts of LC-756 (a chiral agent, manufactured by BASF SE), and 0.51 parts of Lucirin TPO (a photopolymerization initiator, manufactured by BASF SE) were dissolved to prepare Application Liquid 2. Application Liquid 1 prepared was applied to a PET substrate (COSMOSHINE A4100, manufactured by Toyobo Co., Ltd.) with a wire bar so that the film thickness after drying would be 7 $\mu$m, dried at 150°C for 5 minutes to evaporate cyclopentanone, and then cured by irradiation with UV. A cholesteric-liquid-crystal layered product was produced by applying Application Liquid 2, drying, and irradiating with UV in the same way as in production of the cholesteric-liquid-crystal layered product from Application Liquid 1.

(Production of Heat-Ray-Shielding Sheet including Cholesteric-Liquid-Crystal Layer according to the Present Invention)

A dispersion prepared in the same way as in Example 5 was applied to the produced cholesteric-liquid-crystal layered product with a wire bar so that the film thickness after drying would be 500 nm, dried at 100°C for 2 minutes to evaporate toluene, and then irradiated with UV to produce a heat-ray-shielding sheet including the cholesteric-liquid-crystal layer according to the present invention. The total solar energy transmittance (Tts) described below of the obtained heat-ray-shielding sheet was 51.8%.

Comparative Example 4

To find differences in the reflectance, the haze value and the like caused by variations in how ITO was dispersed, a heat-ray-shielding sheet for comparison was produced in the same way as in Example 5 in which the ITO concentration and the like were identical to the concentration and the like in Example 5 and only the peripheral speed of the bead mill was changed to 2 m/s.

Comparative Example 5

To find differences in performances caused by variations in the ITO concentration, a heat-ray-shielding sheet for comparison was produced in the same way as in Example 5 except that the amount of KAYARAD DPHA in Example 1 was changed to 1.3 parts.
A piece of heat-ray-shielding glass was also produced in the same way as in Example 5 by applying an adhesive

agent to the produced heat-ray-shielding sheet to form an adhesive sheet and then laminating the adhesive sheet on a piece of 3-mm clear glass.

Comparative Example 6

To examine effects of a dispersing process with high energy, a heat-ray-shielding sheet for comparison was produced in the same way as in Example 10 except that the peripheral speed of the bead mill was changed to 14 m/s.
Tables 4 and 5 list results of measurements of the visible transmittance, the near-infrared reflectance, the total energy solar transmittance, the haze values, the surface resistivity, the maximum height differences of the surface of layers, and the heat-shielding effects of the heat-ray-shielding sheets and the conductive microparticle layers in Examples 5 to 12 and Comparative Examples 4 to 6.

(Measurement of Visible Transmittance)

The visible transmittance at wavelengths of 380 to 780 nm of the obtained heat-ray-shielding sheet was measured with a spectrophotometer (UV-3100 manufactured by Shimadzu Corporation), in accordance with JIS R 3106.

(Measurement of Near-Infrared Reflectance)

The regular reflectance at 300 nm to 2,500 nm of the obtained heat-ray-shielding sheet was measured with a spectrophotometer (UV-3100 manufactured by Shimadzu Corporation) in accordance with JIS R 3106.

(Measurement of Haze Value)

The haze value of the obtained heat-ray-shielding sheet was measured with a haze meter (TC-HIIIDPK manufactured by Tokyo Denshoku CO., LTD.) in accordance with JIS K 6714.

(Measurement of Surface Resistivity)

The surface resistivity was measured with a surface resistivity meter (Hiresta UP and Loresta GP manufactured by Mitsubishi Chemical Analytech Co., Ltd.).

(Maximum Height Difference of Surface of Layer)

The difference between the maximum height and the minimum height in an area of 0.3 mm × 0.3 mm was measured with a white-light interference surface profiler (Talysurf CCI manufactured by Taylor Hobson Ltd.) with a 50x lens.

(Heat-Shielding Effect)

Test environment: An infrared lamp (100 V, 250 W: manufactured by Toshiba Corporation) was placed at a position that was outside of the central portion of the ceiling of a test box and that was 40 cm distant in height from the ceiling portion of the test box. The test box had an inner diameter width of 150 mm × a length of 235 mm × a height of 110 mm and had an outside-temperature-shielding property and airtightness. The ceiling portion was transparent glass. The produced piece of heat-ray-shielding glass was then placed inside the ceiling portion of the test box so that the glass surface would face the infrared lamp and was secured by taping the four sides. Thermometers were placed at the central portion inside the test box and on the heat-ray-shielding glass surface inside the box so that the thermometers would not be directly irradiated with light from the lamp. The lamp was then turned on to irradiate the piece of heat-ray-shielding glass with infrared light. The temperatures were measured every 10 seconds, and the temperature after 60 minutes in the test box was measured. The test box was placed in a room of about 25°C.
If comparison of the in-box temperatures in the case where the piece of heat-ray-shielding glass produced in Comparative Example 5 was used and the in-box temperatures in the case where the piece of heat-ray-shielding glass produced in Example 5 was used in this test leads to the result that the in-box temperature and the sheet surface temperature is lower when the piece of heat-ray-shielding glass according to the present invention is used, the result indicates improvement of the heat-ray-shielding effect. The in-box temperature difference is calculated by subtracting each of the in-box temperature and the surface temperature when the piece of heat-ray-shielding glass of Comparative Example 5 was used from each of the in-box temperature and the surface temperature when the piece of heat-ray-shielding glass produced in Example 5 was used.

Comparative Example 4 lacks the surface resistivity because the dispersing process is not sufficient and the conductive microparticles are coupled to each other. In addition, near-infrared reflectance is less than 15% because the film surface is not smooth.

Comparative Example 6 satisfies requirements of surface resistivity and the like, but the near-infrared-reflecting property is not exhibited because the too high dispersion energy damaged the surface of the conductive microparticles.

In Comparative Example 5, the near-infrared-reflecting property deriving from plasma oscillations of the conductive microparticles is not exhibited because the large amount of resin binder increases the distance between the particles. The heat-shielding effect measurement indicates the result that the heat-ray-shielding sheet according to the present invention has an equivalent visible transmittance to the visible transmittance of the comparative examples while curbing the rise in the in-box temperature and the glass surface temperature. The result indicates that the heat-shielding effect was improved by imparting a near-infrared-reflecting property.

Table 4

| | Visible transmittance | Haze | Microparticle layer: Reflectance at 2,000 nm | Microparticle layer: Reflectance at 2,300 nm | Microparticle layer: Surface resistivity | Microparticle layer: Maximum height difference of layer surface |
|---|---|---|---|---|---|---|
| Example 5 | 77.3% | 0.4% | 29.4% | 31.3% | $1 \times 10^{10}$ Ω/□ | 11.5 nm |
| Example 6 | 81.2% | 0.3% | 30.1% | 32.6% | $1 \times 10^{10}$ Ω/□ | 12.2 nm |
| Example 7 | 78.1% | 0.5% | 28.8% | 30.9% | $3 \times 10^{10}$ Ω/□ | 13.3 nm |
| Example 8 | 74.9% | 0.3% | 30.2% | 32.9% | $4 \times 10^{10}$ Ω/□ | 18.1 nm |
| Example 9 | 80.5% | 0.2% | 33.2% | 35.0% | $4 \times 10^{9}$ Ω/□ | 10.6 nm |
| Example 10 | 76.2% | 0.4% | 18.1% | 20.4% | $5 \times l0^{12}$ Ω/□ | 10.1 nm |
| Example 11 | 77.0% | 0.7% | 26.0% | 28.9% | $2 \times 10^{9}$ Ω/□ | 55.7 nm |
| Example 12 | 76.6% | 0.6% | 31.2% | 32.0% | $1 \times 10^{10}$ Ω/□ | 10.8 nm |
| Comparative Example 4 | 76.3% | 7.4% | 12.1% | 13.3% | $1 \times 10^{5}$ Ω/□ | 77.4 nm |
| Comparative Example 5 | 78.8% | 0.5% | 3.5% | 4.9% | $1 \times 10^{12}$ Ω/□ | 23.0 nm |
| Comparative Example 6 | 78.0% | 0.9% | 3.0% | 5.0% | $6 \times 10^{12}$ Ω/□ | 16.8 nm |

Table 5

| | In-box temperature | Δ | Glass surface | Δ |
|---|---|---|---|---|
| Example 5 | 67.1°C | -2.9°C | 70.9°C | -3.6°C |
| Comparative Example 5 | 70.2°C | - | 74.5°C | - |

Example 13

(Dielectric Multilayer)

• Preparation of a high-refractive-index layer dispersion

To 7 parts of toluene, 1.4 parts of titanium oxide (product name: TTO-V3, manufactured by Ishihara Sangyo Kaisha, Ltd.), 0.1 parts of KAYARAD DPHA (product name, dipentaerythritol hexaacrylate, manufactured by Nippon Kayaku Co., Ltd.), 0.01 parts of IRGACURE 184 (a radical photopolymerization initiator, manufactured by BASF Japan Ltd.), and 0.1 parts of an aminoalkyl methacrylate copolymer dispersant (product name: DISPERBYK-145, manufactured by BYK Japan K.K.) were added, and a high-refractive-index layer dispersion was prepared by a dispersing process with a bead mill at a peripheral speed of 10 m/s.

• Preparation of a low-refractive-index layer dispersion

Seven parts of a silicon oxide microparticle dispersion (solid content concentration: 20 wt%, product name: MEK-ST, manufactured by Nissan Chemical Industries, Ltd.), 0.1 parts of KAYARAD DPHA (product name, dipentaerythritol hexaacrylate, manufactured by Nippon Kayaku Co., Ltd.), and 0.01 parts of IRGACURE 184 (a radical photopolymerization initiator, manufactured by BASF Japan Ltd.) were added, and a low-refractive-index layer dispersion was prepared.

• Preparation of a dielectric multilayer

The prepared high-refractive-index dispersion was applied to a poly(ethylene terephthalate) (PET) sheet (a substrate) (thickness of 100 μm) with a wire bar so that the optical film thickness after drying would be 250 nm, dried at 100°C for 2 minutes, and then irradiated with UV to produce a high-refractive-index layer. A low-refractive-index layer was produced by applying the low-refractive-index layer dispersion on the high-refractive-index layer so that the optical film thickness after drying would be 250 nm, drying, and irradiating with UV in the same way in production of the high-refractive-index layer.
The procedure above was repeated to alternately layer the high-refractive-index layer and the low-refractive-index layer, thereby producing a dielectric multilayer including 9 layers.

(Production of Heat-Ray-Shielding Sheet)

To 7 parts of toluene, 1.4 parts of tin-doped indium oxide (hereinafter, ITO) described in Example 1, 0.1 parts of KAYARAD DPHA (product name, dipentaerythritol hexaacrylate, manufactured by Nippon Kayaku Co., Ltd.), 0.01 parts of IRGACURE 184 (a photopolymerization initiator, manufactured by BASF Japan Ltd.), and 0.1 parts of an aminoalkyl methacrylate copolymer dispersant were added, and a dispersion was prepared by a dispersing process with a bead mill at a peripheral speed of 10 m/s.
The prepared dispersion was applied to the produced dielectric multilayer with a wire bar, dried at 100°C for 2 minutes to evaporate toluene, and then irradiated with UV to produce the heat-ray-shielding sheet according to the present invention.

Example 14

(Production of Cholesteric-Liquid-Crystal Layered Product)

In 25 parts of cyclopentanone, 10 parts of LC-242 (a liquid crystal compound, manufactured by BASF SE), 0.38 parts of LC-756 (a chiral agent, manufactured by BASF SE), and 0.52 parts of Lucirin TPO (a photopolymerization initiator, manufactured by BASF SE) were dissolved to prepare Application Liquid 1. In 25 parts of cyclopentanone, 10 parts of LC-242 (a liquid crystal compound, manufactured by BASF SE), 0.30 parts of LC-756 (a chiral agent, manufactured by BASF SE), and 0.51 parts of Lucirin TPO (a photopolymerization initiator, manufactured by BASF SE) were dissolved to prepare Application Liquid 2. In 25 parts of cyclopentanone, 10 parts of LC-242 (a liquid crystal compound, manufactured by BASF SE), 0.26 parts of LC-756 (a chiral agent, manufactured by BASF SE), and 0.51 parts of Lucirin TPO (a photopolymerization initiator, manufactured by BASF SE) were dissolved to prepare Application Liquid 3.
Application Liquid 1 prepared was applied to a PET substrate (COSMOSHINE A4100, manufactured by Toyobo Co., Ltd.) with a wire bar, dried at 150°C for 5 minutes to evaporate cyclopentanone, and then cured by irradiation with UV. A cholesteric-liquid-crystal layered product was produced by performing sequentially the procedures of applying Application Liquids 2 and 3, drying, and irradiating with UV in the same way as in production of the cholesteric-liquid-crystal layered product from the procedure for Application Liquid 1.

(Production of Heat-Ray-Shielding Sheet)

A dispersion prepared in the same way as in Example 13 was applied to the produced cholesteric-liquid-crystal layered product with a wire bar, dried at 100°C for 2 minutes to evaporate toluene, and then irradiated with UV to produce the heat-ray-shielding sheet according to the present invention.
An adhesive agent was applied to the produced heat-ray-shielding sheet to form an adhesive sheet, which was then laminated to a piece of 3-mm clear glass to produce a piece of heat-ray-shielding glass.

Example 15

The heat-ray-shielding sheet according to the present invention was produced in the same way as in Example 13 except that the dielectric multilayer was changed to Nano90S (manufactured by Sumitomo 3M Ltd., a birefringent multilayer).

Example 16

The heat-ray-shielding sheet according to the present invention was produced in the same way as in Example 13 except that the amount of KAYARAD DPHA was changed to 0.3 parts.

Example 17

The heat-ray-shielding sheet according to the present invention was produced in the same way as in Example 13 except that the peripheral speed of the bead mill was changed to 5 m/s.

Comparative Example 7

A heat-ray-shielding sheet for comparison was produced in the same way as in Example 14 except that the amount of KAYARAD DPHA was changed to 1.3 parts. An adhesive agent was applied to the produced heat-ray-shielding sheet to form an adhesive sheet, which was then laminated to a piece of 3-mm clear glass to produce a piece of heat-ray-shielding glass.

Tables 6 and 7 list results of measurements of the visible transmittance, the total solar energy, the haze values, the surface resistivity, the maximum height differences of the surface of layers, and the heat-shielding effects of the heat-ray-shielding sheets in Examples 13 to 17 and Comparative Example 7.

(Measurement of Visible Transmittance)

The visible transmittance at wavelengths of 380 nm to 780 nm of the obtained heat-ray-shielding sheet was measured with a spectrophotometer (UV-3100 manufactured by Shimadzu Corporation) in accordance with JIS R 3106.

(Measurement of Total Solar Energy Transmittance (Tts))

Total solar energy transmittance (Tts) is a measure indicating how much thermal energy from the sun is transmitted by a target material. The total solar energy transmittance was calculated by a formula defined in ISO13837 based on the measurement data of the transmittance and reflectance at 300 nm to 2,500 nm of the heat-ray-shielding sheet obtained with the spectrophotometer (UV-3100 manufactured by Shimadzu Corporation) in accordance with JIS R 3106.

A smaller calculated value indicates that the transmitted total solar energy is small and the heat-ray-shielding property is high.

(Measurement of Haze Value)

The haze value of the obtained heat-ray-shielding sheet was measured with a haze meter (TC-HIIIDPK manufactured by Tokyo Denshoku CO., LTD.) in accordance with JIS K 6714.

(Measurement of Surface Resistivity)

The surface resistivity was measured with a surface resistivity meter (Hiresta UP and Loresta GP manufactured by Mitsubishi Chemical Analytech Co., Ltd.).

(Maximum Height Difference of Surface of Layer)

The difference between the maximum height and the minimum height in an area of 0.3 mm $\times$ 0.3 mm was measured with a white-light interference surface profiler (Talysurf CCI manufactured by Taylor Hobson Ltd.) with a 50x lens.

(Heat-Shielding Effect)

Test environment: An infrared lamp (100 V, 250 W: manufactured by Toshiba Corporation) was placed at a position that was outside of the central portion of the ceiling of a test box and that was 40 cm distant in height from the ceiling portion of the test box. The test box had an inner diameter width of 150 mm × a length of 235 mm × a height of 110 mm and had an outside-temperature-shielding property and airtightness. The ceiling portion was transparent glass. The produced piece of heat-ray-shielding glass was then placed inside the ceiling portion of the test box so that the glass surface would face the infrared lamp and was secured by taping the four sides. Thermometers were placed at the central portion inside the test box and on the heat-ray-shielding glass surface inside the box so that the thermometers would not be directly irradiated with light from the lamp. The lamp was then turned on to irradiate the piece of heat-ray-shielding glass with infrared light. The temperatures were measured every 10 seconds, and the temperature after 60 minutes in the test box was measured. The test box was placed in a room of about 25°C.

If comparison of the in-box temperatures in the case where the piece of heat-ray-shielding glass produced in Comparative Example 7 was used and the in-box temperatures in the case where the piece of heat-ray-shielding glass produced in Example 14 was used in this test leads to the result that each of the in-box temperature and the sheet surface temperature is lower when the piece of heat-ray-shielding glass according to the present invention is used, the result indicates improvement of the heat-ray-shielding effect.

The in-box temperature difference is calculated by subtracting each of the in-box temperature and the surface temperature when the piece of heat-ray-shielding glass of Comparative Example 7 was used from each of the in-box temperature and the surface temperature when the piece of heat-ray-shielding glass produced in Example 14 was used.

In Comparative Example 7, the near-infrared-reflecting property deriving from plasma oscillations of the heat-shielding microparticles is not exhibited because the large amount of resin binder increases the distance between the particles. The heat-shielding effect measurement indicates the result that the heat-ray-shielding sheet according to the present invention has an equivalent visible transmittance to the comparative examples while curbing the rise in the in-box temperature and the glass surface temperature. The result indicates that the heat-shielding effect is improved by imparting a near-infrared-reflecting property to the heat-ray-shielding layer (referred to as the microparticle layer in Table 6 below) as listed in Table 2 above.

Table 6

| | Visible transmittance | Haze | Tts | Microparticle layer: Surface resistivity | Maximum height difference of layer surface |
|---|---|---|---|---|---|
| Example 13 | 80.4% | 0.3% | 49.2% | $1 \times 10^{10}$ Ω/□ | 10.8 nm |
| Example 14 | 82.7% | 0.8% | 65.4% | $1 \times 10^{10}$ Ω/□ | 13.2 nm |
| Example 15 | 81.9% | 0.7% | 60.9% | $1 \times 10^{10}$ Ω/□ | 13.3 nm |
| Example 16 | 80.7% | 0.3% | 50.0% | $4 \times 10^{12}$ Ω/□ | 10.5 nm |
| Example 17 | 80.0% | 0.7% | 49.7% | $4 \times 10^{9}$ Ω/□ | 55 nm |
| Comparative Example 7 | 82.2% | 0.8% | 66.0% | $1 \times 10^{12}$ Ω/□ | 20 nm |

Table 7

| | In-box temperature | Δ | Glass surface | Δ |
|---|---|---|---|---|
| Example 14 | 65.3°C | -2.3°C | 66.9°C | -2.6°C |
| Comparative Example 7 | 67.6°C | - | 69.5°C | - |

Industrial Applicability

The present invention can sufficiently disperse metal oxide microparticles in the heat-ray-shielding layer and utilizes the near-infrared-reflecting property of the metal oxide microparticles in addition to the near-infrared-absorbing property, whereby the present invention can curb the rise in temperature caused by heat rays and therefore can prevent thermal cracking and the like more effectively than conventional heat-ray-shielding sheets utilizing only the near-infrared-absorbing property of the metal oxide microparticles. In addition, to improve the heat-shielding efficiency, the heat-ray-shielding layer can include the near-infrared-absorbing dye, or the heat-ray-shielding sheet can include the near-infrared-absorbing dye layer in addition to the heat-ray-shielding layer. The heat-ray-shielding sheet can further include the reflecting layer. Such constitutions enable high heat-shielding efficiency. Therefore, the present invention can curb the rise in temperature in space in housing and automobiles and reduce the load on air conditioners, thereby contributing to energy conservation and solutions to global environmental problems.

Reference Signs List

10 model diagram of heat-ray-shielding sheet according to the present invention
11 heat-ray-shielding layer according to the present invention
12 support
13 reflecting layer

## Claims

**1.** A heat-ray-shielding sheet comprising:

a support; and
a heat-ray-shielding layer above the support, the heat-ray-shielding layer comprising:

a microparticle having an average particle diameter of equal to or less than 100 nm; and
a resin binder filling a void part,

wherein a content ratio of the resin binder in the heat-ray-shielding layer is 5 to 40 wt% of a total amount of the heat-ray-shielding layer,
wherein the heat-ray-shielding layer is obtainable by a process comprising the step of dispersing the microparticles in the resin binder with a bead mill at a peripheral speed of 3 m/s to 12 m/s,
wherein a reflectance of the heat-ray-shielding sheet at a wavelength of at least 2,000 nm is at least 15%,

wherein a surface resistivity of the heat-ray-shielding sheet is equal to or more than $10^6$ Ω/□, and
wherein the reflectance and the surface resistivity of the heat-ray-shielding sheet are determined using the heat-ray-shielding sheet obtained by forming the heat-ray-shielding layer on a poly(ethylene terephthalate) support having a thickness of 100 μm, a visible transmittance of 92%, and a haze value of 0.3%, such that the heat-ray-shielding sheet has a thickness of 500 nm after being dried or cured.

**2.** The heat-ray-shielding sheet according to claim 1, wherein a maximum height difference of a surface of the heat-ray-shielding layer is equal to or less than 60 nm,
wherein the maximum height difference on the surface of the heat-ray-shielding layer is determined by the steps of determining a maximum height and a minimum height of the heat-ray-shielding layer in an arbitrary area of 0.3 mm × 0.3 mm in the entire surface of the heat-ray-shielding layer with a white-light interference surface profiler with a 50x lens,
and setting a difference between the maximum height and the minimum height in the area to be the maximum height difference on the surface of the heat-ray-shielding layer.

**3.** The heat-ray-shielding sheet according to claim 1 or 2, wherein a haze value of the heat-ray-shielding layer is equal to or less than 3%.

**4.** The heat-ray-shielding sheet according to any one of claims 1 to 3, wherein a powder resistivity of the microparticle is equal to or less than 10 Ω·cm.

**5.** The heat-ray-shielding sheet according to any one of claims 1 to 4, wherein the microparticles are made of at least one selected from the group consisting of tin oxide, indium oxide, zinc oxide, and tungsten oxide.

**6.** The heat-ray-shielding sheet according to any one of claims 1 to 5, wherein the microparticles are made of tin-doped indium oxide.

7. The heat-ray-shielding sheet according to any one of claims 1 to 6, wherein a content ratio of the microparticles is 60 to 95 wt% in the heat-ray-shielding sheet.

8. The heat-ray-shielding sheet according to any one of claims 1 to 7, wherein a visible transmittance of the heat-ray-shielding layer is equal to or more than 70%.

9. The heat-ray-shielding sheet according to any one of claims 1 to 7,
wherein the microparticle is a conductive microparticle,
wherein the heat-ray-shielding layer further comprises a near-infrared-absorbing dye, and
wherein the near-infrared-absorbing dye is dispersed in the resin binder.

10. The heat-ray-shielding sheet according to any one of claims 1 to 7, the heat-ray-shielding sheet further comprising a dye layer comprising a near-infrared-absorbing dye in addition to the heat-ray-shielding layer.

11. The heat-ray-shielding sheet according to claim 9 or 10,
having a visible transmittance equal to or more than 50%, and
having a haze value equal to or less than 3%.

12. The heat-ray-shielding sheet according to any one of claims 9 to 11, the heat-ray-shielding sheet comprising at least one of a porphyrazine dye and a diimmonium dye as the near-infrared-absorbing dye.

13. The heat-ray-shielding sheet according to any one of claims 9 to 12, the heat-ray-shielding sheet comprising, as the porphyrazine dye, a porphyrazine dye represented by Formula (1) below:

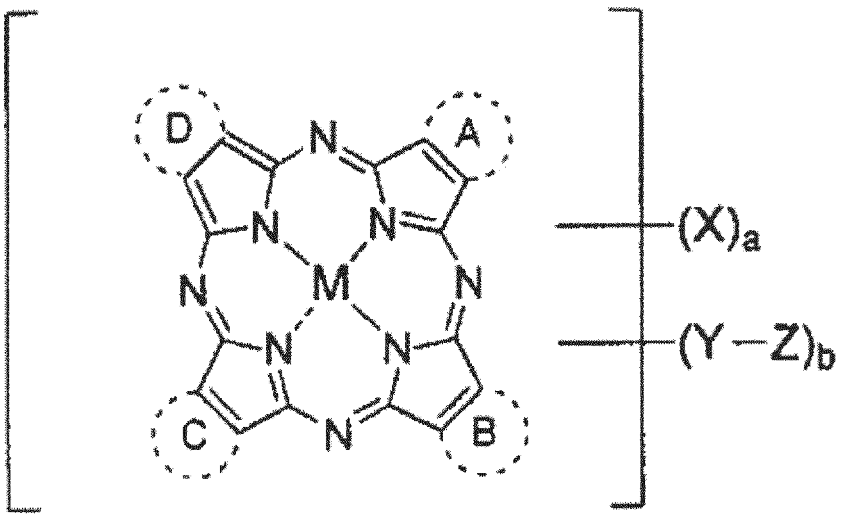

(1)

[in Formula (1), M represents a metal atom, a metal oxide, a metal hydroxide, a metal halide, or a hydrogen atom, each of broken-line portions of rings A, B, C, and D is independently any one of structures of Formulae (2) to (8) below:

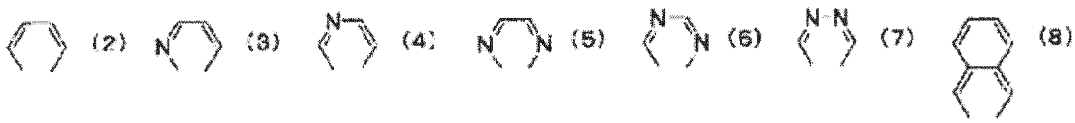

(2) (3) (4) (5) (6) (7) (8)

wherein an opening portion of each of the rings A, B, C, and D is bonded to a skeleton structure to form an aromatic ring, X represents a lower alkyl group, a lower alkoxy group, an amino group, a nitro group, a halogen group, a hydroxy group, a carboxy group, a sulfonic acid group, or a sulfonamido group, Y represents a divalent cross-linking group, Z represents a sulfonic acid group, a carboxy group, a primary or secondary amine residue derived from a primary or secondary amine by removal of at least one hydrogen atom on a nitrogen atom, an acid amido group, or a nitrogen-atom containing heterocyclic residue derived from a nitrogen-atom containing heterocyclic by removal of at least one hydrogen atom on a nitrogen atom, and a and b each represent a number of a corresponding group, are both average values, and are each independently equal to or more than 0 and equal to or less than 12, wherein

a sum of a and b is equal to or more than 0 and equal to or less than 12].

**14.** The heat-ray-shielding sheet according to claim 13, wherein each of the rings A, B, C, and D in Formula (1) is independently any one of Formula (2), Formula (4), or Formula (8).

**15.** The heat-ray-shielding sheet according to claim 13 or 14, wherein M in Formula (1) is VO or Cu.

**16.** The heat-ray-shielding sheet according to any one of claims 13 to 15,
wherein Y in Formula (1) is an alkylene group having 1 to 3 carbon atoms, and
wherein Z in Formula (1) is a phthalimido group that may have a substituent or a piperazino group that may have a substituent.

**17.** The heat-ray-shielding sheet according to claim 14 or 15, wherein the porphyrazine dye of Formula (1) is a porphyrazine dye represented by Formula (9) below:

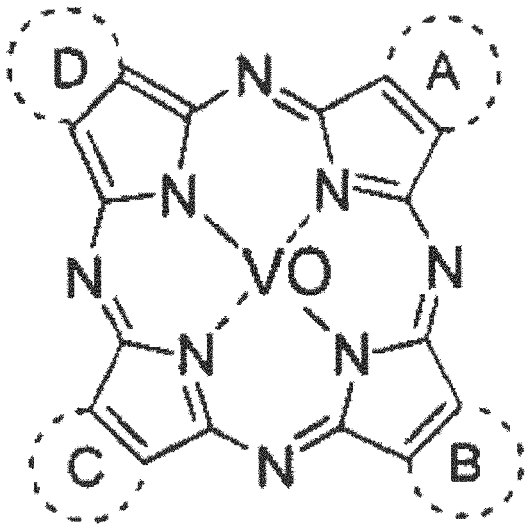

(9)

[wherein each of rings A, B, C, and D in Formula (9) is independently a structure of Formula (4) or Formula (8) below:

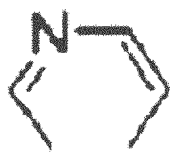

(4)

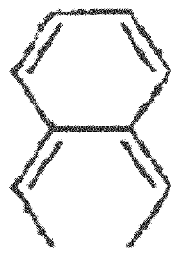

(8)

wherein an opening portion of each of the rings A, B, C, and D is bonded to a skeleton structure to form an aromatic ring].

**18.** The heat-ray-shielding sheet according to any one of claims 9 to 17, the heat-ray-shielding sheet further comprising a reflecting layer having a radio-wave-transmitting property and configured to reflect light of at least one wavelength in a wavelength region of 780 to 2,000 nm.

**19.** The heat-ray-shielding sheet according to claim 18, wherein the reflecting layer is at least one selected from the group consisting of at least one cholesteric-liquid-crystal layer, a dielectric multilayer, and a birefringent multilayer.

**20.** The heat-ray-shielding sheet according to claim 19, wherein the reflecting layer is the at least one cholesteric-liquid-crystal layer.

**21.** The heat-ray-shielding sheet according to any one of claims 1 to 20, wherein the resin binder is a cured product of a thermosetting or light curable resin or is a thermoplastic resin.

## Patentansprüche

**1.** Wärmestrahlenabschirmfilm, umfassend:

einen Träger; und
eine Wärmestrahlenabschirmschicht auf dem Träger, wobei die Wärmestrahlenabschirmschicht umfasst:

ein Mikroteilchen mit einem mittleren Teilchendurchmesser von gleich oder kleiner als 100 nm; und
einen Harzbinder, der einen Hohlraum füllt,

wobei ein Gehaltsverhältnis des Harzbinders in der Wärmestrahlenabschirmschicht 5 bis 40 Gew.-% einer Gesamtmenge der Wärmestrahlenabschirmschicht beträgt,
wobei die Wärmestrahlenabschirmschicht durch ein Verfahren erhältlich ist, umfassend den Schritt des Dispergierens der Mikroteilchen in dem Harzbinder mit einer Kugelmühle bei einer Umfangsgeschwindigkeit von 3 m/s bis 12 m/s,
wobei ein Reflexionssvermögen des Wärmestrahlenabschirmfilms bei einer Wellenlänge von mindestens 2 000 nm mindestens 15% beträgt,
wobei ein Oberflächenwiderstand des Wärmestrahlenabschirmfilms gleich oder größer als $10^6$ Ω/ ist,
und
wobei das Reflexionsvermögen und der Oberflächenwiderstand des Wärmestrahlenabschirmfilms bestimmt werden unter Verwendung des Wärmestrahlenabschirmfilms, der durch Bilden der Wärmestrahlenabschirmschicht auf einem Polyethylenterephthalat-Träger mit einer Dicke von 100 μm, einer Transparenz im Sichtbaren von 92% und einem Trübungswert von 0,3%, so dass der Wärmestrahlenabschirmfilm nach dem Trocknen oder Aushärten eine Dicke von 500 nm aufweist, erhalten wird.

**2.** Wärmestrahlenabschirmfilm nach Anspruch 1, wobei eine maximale Höhendifferenz einer Oberfläche der Wärmestrahlenabschirmschicht gleich oder kleiner als 60 nm ist,
wobei die maximale Höhendifferenz auf der Oberfläche der Wärmestrahlenabschirmschicht durch die folgenden Schritte bestimmt wird
Bestimmen einer maximalen Höhe und einer minimalen Höhe der Wärmestrahlenabschirmschicht in einem beliebigen Bereich von 0,3 mm × 0,3 mm auf der gesamten Oberfläche der Wärmestrahlenabschirmschicht mit einem Weißlichtinterferenzoberflächenprofilgerät mit einer 50x Linse,
und Festlegen einer Differenz zwischen der maximalen Höhe und der minimalen Höhe in dem Bereich als die maximale Höhendifferenz auf der Oberfläche der Wärmestrahlenabschirmschicht.

**3.** Wärmestrahlenabschirmfilm nach Anspruch 1 oder 2, wobei ein Trübungswert der Wärmestrahlenabschirmschicht gleich oder kleiner als 3% ist.

**4.** Wärmestrahlenabschirmfilm nach einem der Ansprüche 1 bis 3, wobei ein Pulverwiderstand des Mikroteilchens gleich oder kleiner als 10 Q · cm ist.

**5.** Wärmestrahlenabschirmfilm nach einem der Ansprüche 1 bis 4, wobei die Mikroteilchen aus mindestens einem aus der Gruppe, bestehend aus Zinnoxid, Indiumoxid, Zinkoxid und Wolframoxid, hergestellt sind.

**6.** Wärmestrahlenabschirmfilm nach einem der Ansprüche 1 bis 5, wobei die Mikroteilchen aus mit Zinn dotiertem Indiumoxid hergestellt sind.

**7.** Wärmestrahlenabschirmfilm nach einem der Ansprüche 1 bis 6, wobei ein Gehaltsverhältnis der Mikroteilchen in dem Wärmestrahlenabschirmfilm 60 bis 95 Gew.-% beträgt.

**8.** Wärmestrahlenabschirmfilm nach einem der Ansprüche 1 bis 7, wobei eine Transparenz im Sichtbaren der Wärmestrahlenabschirmschicht gleich oder größer als 70% ist.

**9.** Wärmestrahlenabschirmfilm nach einem der Ansprüche 1 bis 7,

wobei das Mikroteilchen ein leitfähiges Mikroteilchen ist,
wobei die Wärmestrahlenabschirmschicht weiter einen im nahen Infrarot absorbierenden Farbstoff umfasst, und
wobei der im nahen Infrarot absorbierende Farbstoff in dem Harzbinder dispergiert ist.

**10.** Wärmestrahlenabschirmfilm nach einem der Ansprüche 1 bis 7, wobei der Wärmestrahlenabschirmfilm zusätzlich zu der Wärmestrahlenabschirmschicht weiter eine Farbstoffschicht umfasst, die einen im nahen Infrarot absorbierenden Farbstoff umfasst.

**11.** Wärmestrahlenabschirmfilm nach Anspruch 9 oder 10 mit einer Transparenz im Sichtbaren gleich oder größer als 50% und einem Trübungswert gleich oder kleiner als 3%.

**12.** Wärmestrahlenabschirmfilm nach einem der Ansprüche 9 bis 11, wobei der Wärmestrahlenabschirmfilm mindestens einen von einem Porphyrazinfarbstoff und einem Diimmoniumfarbstoff als den im nahen Infrarot absorbierenden Farbstoff umfasst.

**13.** Wärmestrahlenabschirmfilm nach einem der Ansprüche 9 bis 12, wobei der Wärmestrahlenabschirmfilm als den Porphyrazinfarbstoff einen durch die folgende Formel (1) dargestellten Porphyrazinfarbstoff umfasst:

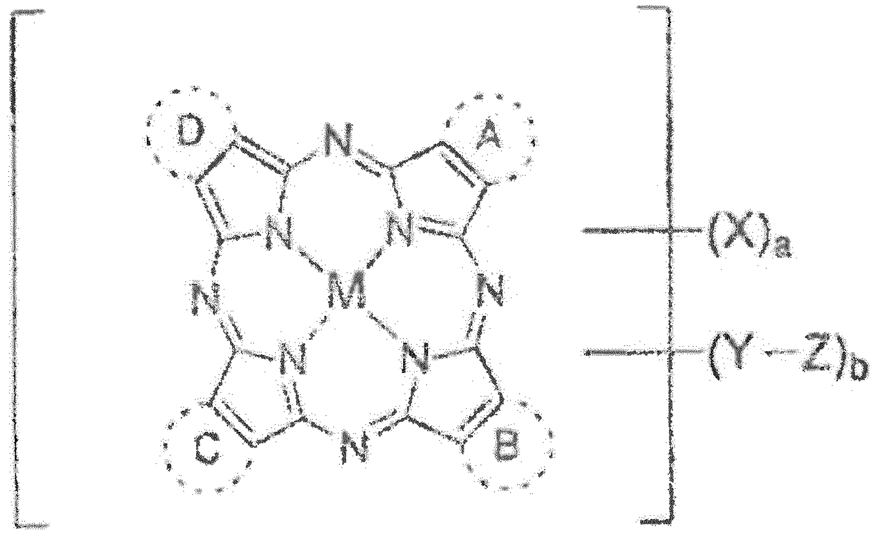 (1)

[in Formel (1) stellt M ein Metallatom, ein Metalloxid, ein Metallhydroxid, ein Metalhalogenid oder ein Wasserstoffatom dar, jeder der gestrichelten Linienbereiche der Ringe A, B, C und D ist unabhängig eine der Strukturen der folgenden Formeln (2) bis (8):

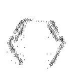 (2) 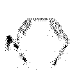 (3) 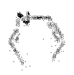 (4) 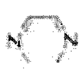 (5) 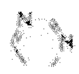 (6) 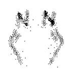 (7) 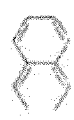 (8)

wobei ein Öffnungsbereich jedes der Ringe A, B, C und D unter Bildung eines aromatischen Rings an eine Gerüststruktur gebunden ist, X stellt eine Niederalkylgruppe, eine Niederalkoxygruppe, eine Aminogruppe, eine Nitrogruppe, eine Halogengruppe, eine Hydroxygruppe, eine Carboxygruppe, eine Sulfonsäuregruppe oder eine Sulfonamidogruppe dar, Y stellt eine zweiwertige Vernetzungsgruppe dar, Z stellt eine Sulfonsäuregruppe, eine Carboxygruppe, einen primären oder sekundären Aminrest, abgeleitet von einem primären oder sekundären Amin durch Entfernung von mindestens einem Wasserstoffatom an einem Stickstoffatom, eine Säureamidgruppe oder einen Stickstoffatom enthaltenden heterocyclischen Rest, abgeleitet von einem Stickstoffatom enthaltenden Heterocyclus durch Entfernung von mindestens einem Wasserstoffatom an einem Stickstoffatom, dar, und a und b stellen jeweils eine Zahl einer entsprechenden Gruppe dar, sind beides Durchschnittswerte, und sind jeweils unabhängig gleich oder größer als 0 und gleich oder kleiner als 12, wobei die Summe von a und b gleich oder größer als 0 und gleich oder kleiner als 12 ist].

**14.** Wärmestrahlenabschirmfilm nach Anspruch 13, wobei jeder der Ringe A, B, C und D in Formel (1) unabhängig eine von Formel (2), Formel (4) oder Formel (8) hat.

**15.** Wärmestrahlenabschirmfilm nach Anspruch 13 oder 14, wobei M in Formel (1) VO oder Cu ist.

**16.** Wärmestrahlenabschirmfilm nach einem der Ansprüche 13 bis 15,
wobei Y in Formel (1) eine Alkylengruppe mit 1 bis 3 Kohlenstoffatomen ist, und
wobei Z in Formel (1) eine Phthalimidogruppe, die einen Substituenten haben kann, oder eine Piperazinogruppe, die einen Substituenten haben kann, ist.

**17.** Wärmestrahlenabschirmfilm nach Anspruch 14 oder 15, wobei der Porphyrazinfarbstoff der Formel (1) ein Porphyrazinfarbstoff ist, der durch folgende Formel (9) dargestellt wird:

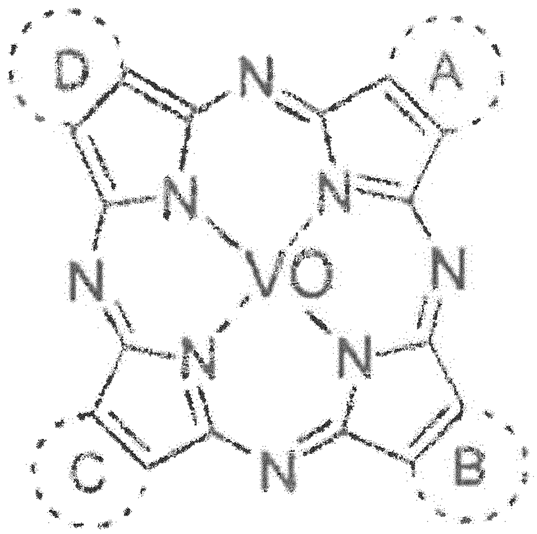

(9)

[wobei jeder der Ringe A, B, C und D in Formel (9) unabhängig eine Struktur der folgenden Formel (4) oder Formel (8) ist:

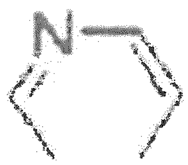

(4)

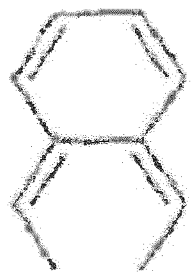

(8)

wobei ein Öffnungsbereich jedes der Ringe A, B, C und D an eine Gerüststruktur zur Bildung eines aromatischen Rings gebunden ist].

**18.** Wärmestrahlenabschirmfilm nach einem der Ansprüche 9 bis 17, wobei der Wärmestrahlenabschirmfilm weiter eine reflektierende Schicht umfasst, die eine Funkwellen übertragenden Eigenschaft hat und so konfiguriert ist, dass sie Licht mit mindestens einer Wellenlänge in einem Wellenlängenbereich von 780 bis 2 000 nm reflektiert.

**19.** Wärmestrahlenabschirmfilm nach Anspruch 18, wobei die reflektierende Schicht mindestens eine, ausgewählt aus der Gruppe, bestehend aus mindestens einer cholesterischen Flüssigkristallschicht, einer dielektrischen Mehrschicht und einer doppelbrechenden Mehrschicht, ist.

**20.** Wärmestrahlenabschirmfilm nach Anspruch 19, wobei die reflektierende Schicht mindestens eine cholesterische Flüssigkristallschicht ist

21. Wärmestrahlenabschirmfilm nach einem der Ansprüche 1 bis 20, wobei der Harzbinder ein gehärtetes Produkt eines wärmehärtbaren oder lichthärtbaren Harzes oder ein thermoplastisches Harz ist.

## Revendications

1. Feuille d'écrantage vis-à-vis d'un rayon thermique comprenant :

   un support ; et
   une couche d'écrantage vis-à-vis d'un rayon thermique au-dessus du support, la couche d'écrantage vis-à-vis d'un rayon thermique comprenant :

      une microparticule ayant un diamètre moyen de particule égal ou inférieur à 100 nm ; et
      un liant de résine remplissant une partie de vide,

   où un rapport en teneur du liant de résine dans la couche d'écrantage vis-à-vis d'un rayon thermique est de 5 à 40 % en poids d'une quantité totale de la couche d'écrantage vis-à-vis d'un rayon thermique,
   où la couche d'écrantage vis-à-vis d'un rayon thermique peut être obtenue par un procédé comprenant l'étape consistant à disperser les microparticules dans le liant de résine avec un broyeur à billes à une vitesse périphérique de 3 m/s à 12 m/s,
   où une réflectance de la feuille d'écrantage vis-à-vis d'un rayon thermique à une longueur d'onde d'au moins 2 000 nm est au moins de 15 %,
   où une résistivité de surface de la feuille d'écrantage vis-à-vis d'un rayon thermique est égale ou supérieure à $10^6$ Ω/□, et
   où la réflectance et la résistivité de surface de la feuille d'écrantage vis-à-vis d'un rayon thermique sont déterminées à l'aide de la feuille d'écrantage vis-à-vis d'un rayon thermique obtenue par formation de la couche d'écrantage vis-à-vis d'un rayon thermique sur un support de poly(téréphtalate d'éthylène) ayant une épaisseur de 100 μm, une transmittance dans le visible de 92 %, et une valeur de trouble de 0,3 %, de sorte que la feuille d'écrantage vis-à-vis d'un rayon thermique a une épaisseur de 500 nm après avoir été séchée ou durcie.

2. Feuille d'écrantage vis-à-vis d'un rayon thermique selon la revendication 1, où une différence de hauteur maximale d'une surface de la couche d'écrantage vis-à-vis d'un rayon thermique est égale ou inférieure à 60 nm,
   où la différence de hauteur maximale sur la surface de la couche d'écrantage vis-à-vis d'un rayon thermique est déterminée par les étapes consistant à
   déterminer une hauteur maximale et une hauteur minimale de la couche d'écrantage vis-à-vis d'un rayon thermique dans une zone arbitraire de 0,3 mm x 0,3 mm sur toute la surface de la couche d'écrantage vis-à-vis d'un rayon thermique avec un profileur de surface à interférences en lumière blanche ayant un objectif 50x,
   et régler une différence entre la hauteur maximale et la hauteur minimale dans la zone pour qu'elle soit la différence de hauteur maximale sur la surface de la couche d'écrantage vis-à-vis d'un rayon thermique.

3. Feuille d'écrantage vis-à-vis d'un rayon thermique selon la revendication 1 ou 2, où une valeur de trouble de la couche d'écrantage vis-à-vis d'un rayon thermique est égale ou inférieure à 3 %.

4. Feuille d'écrantage vis-à-vis d'un rayon thermique selon l'une quelconque des revendications 1 à 3, où une résistivité de poudre de la microparticule est égale ou inférieure à 10 Ω·cm.

5. Feuille d'écrantage vis-à-vis d'un rayon thermique selon l'une quelconque des revendications 1 à 4, où les microparticules sont faites d'au moins l'un choisi dans le groupe constitué par l'oxyde d'étain, l'oxyde d'indium, l'oxyde de zinc et l'oxyde de tungstène.

6. Feuille d'écrantage vis-à-vis d'un rayon thermique selon l'une quelconque des revendications 1 à 5, où les microparticules sont faites d'oxyde d'indium dopé à l'étain.

7. Feuille d'écrantage vis-à-vis d'un rayon thermique selon l'une quelconque des revendications 1 à 6, où un rapport en teneur des microparticules est de 60 à 95 % en poids dans la feuille d'écrantage vis-à-vis d'un rayon thermique.

8. Feuille d'écrantage vis-à-vis d'un rayon thermique selon l'une quelconque des revendications 1 à 7, où une transmittance dans le visible de la couche d'écrantage vis-à-vis d'un rayon thermique est égale ou inférieure à 70 %.

**9.** Feuille d'écrantage vis-à-vis d'un rayon thermique selon l'une quelconque des revendications 1 à 7, où la microparticule est une microparticule conductrice, où la couche d'écrantage vis-à-vis d'un rayon thermique comprend en outre un colorant d'absorption dans l'infrarouge proche, et où le colorant d'absorption dans l'infrarouge proche est dispersé dans le liant de résine.

**10.** Feuille d'écrantage vis-à-vis d'un rayon thermique selon l'une quelconque des revendications 1 à 7, la feuille d'écrantage vis-à-vis d'un rayon thermique comprenant en outre une couche de colorant comprenant un colorant d'absorption dans l'infrarouge proche en plus de la couche d'écrantage vis-à-vis d'un rayon thermique.

**11.** Feuille d'écrantage vis-à-vis d'un rayon thermique selon la revendication 9 ou 10, ayant une transmittance dans le visible égale ou supérieure à 50 %, et ayant une valeur de trouble égale ou inférieure à 3 %.

**12.** Feuille d'écrantage vis-à-vis d'un rayon thermique selon l'une quelconque des revendications 9 à 11, la feuille d'écrantage vis-à-vis d'un rayon thermique comprenant au moins un colorant porphyrazine et un colorant diimmonium comme colorant d'absorption dans l'infrarouge proche.

**13.** Feuille d'écrantage vis-à-vis d'un rayon thermique selon l'une quelconque des revendications 9 à 12, la feuille d'écrantage vis-à-vis d'un rayon thermique comprenant, comme colorant porphyrazine, un colorant porphyrazine représenté par la Formule (1) ci-après :

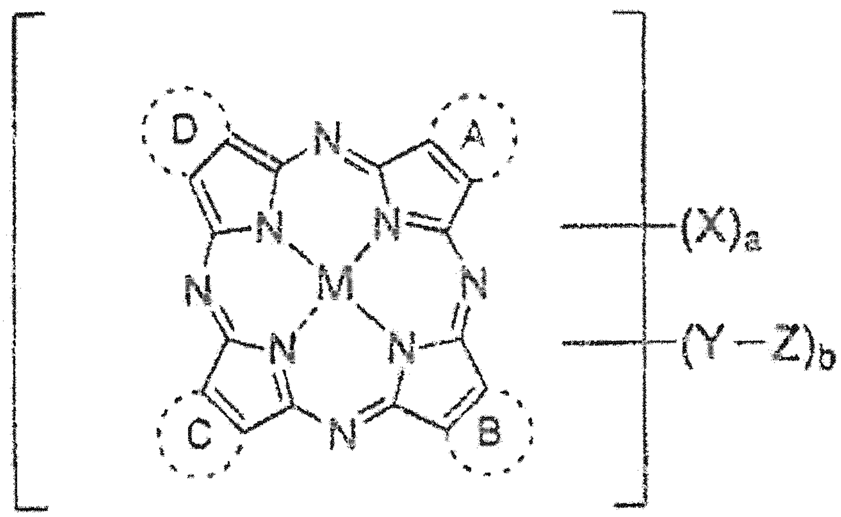

(1)

[dans la Formule (1), M représente un atome métallique, un oxyde métallique, un hydroxyde métallique, un halogénure métallique, ou un atome d'hydrogène, chacune des parties en lignes discontinues des cycles A, B, C et D est indépendamment l'une quelconque des structures de Formules (2) à (8) ci-après :

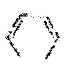 (2) 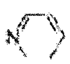 (3) 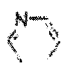 (4) 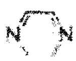 (5) 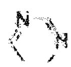 (6) 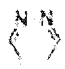 (7) 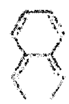 (8)

où une partie d'ouverture de chacun des cycles A, B, C et D est liée à une structure de squelette pour former un cycle aromatique, X représente un groupe alkyle inférieur, un groupe alcoxy inférieur, un groupe amino, un groupe nitro, un groupe halogène, un groupe hydroxy, un groupe carboxy, un groupe acide sulfonique, ou un groupe sulfonamido, Y représente un groupe de réticulation divalent, Z représente un groupe acide sulfonique, un groupe carboxy, un résidu d'amine primaire ou secondaire issu d'une amine primaire ou secondaire par retrait d'au moins un atome d'hydrogène sur un atome d'azote, un groupe acide amido, ou un résidu hétérocyclique à teneur en atome d'azote issu d'un hétérocyclique à teneur en atome d'azote par retrait d'au moins un atome d'hydrogène sur un atome d'azote, et a et b représentent chacun un nombre d'un groupe correspondant, sont tous les deux des valeurs moyennes, et sont chacun indépendamment égaux ou supérieurs à 0 et égaux ou inférieurs à 12, où une somme

de a et b est égale ou supérieure à 0 et égale ou inférieure à 12].

**14.** Feuille d'écrantage vis-à-vis d'un rayon thermique selon la revendication 13, où chacun des cycles A, B, C et D dans la Formule (1) est indépendamment l'un quelconque parmi la Formule (2), la Formule (4) ou la Formule (8).

**15.** Feuille d'écrantage vis-à-vis d'un rayon thermique selon la revendication 13 ou 14, où M dans la Formule (1) est VO ou Cu.

**16.** Feuille d'écrantage vis-à-vis d'un rayon thermique selon l'une quelconque des revendications 13 à 15,
où Y dans la Formule (1) est un groupe alkylène ayant de 1 à 3 atomes de carbone, et
où Z dans la Formule (1) est un groupe phtalimido qui peut avoir un substituant ou un groupe pipérazino qui peut avoir un substituant.

**17.** Feuille d'écrantage vis-à-vis d'un rayon thermique selon la revendication 14 ou 15, où le colorant porphyrazine de Formule (1) est un colorant porphyrazine représenté par la Formule (9) ci-après :

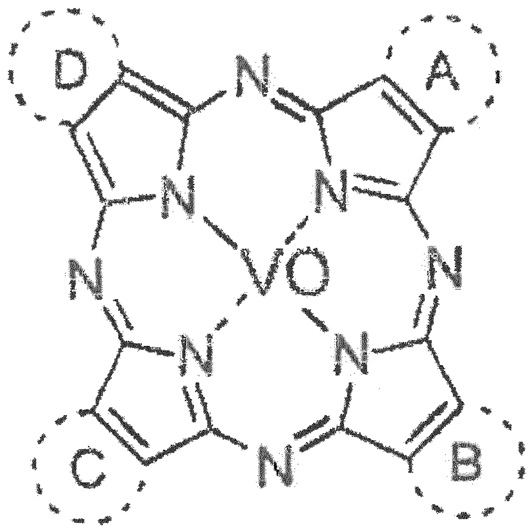

(9)

[où chacun des cycles A, B, C et D dans la Formule (9) est indépendamment une structure de Formule (4) ou de Formule (8) ci-après :

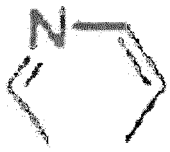

(4)

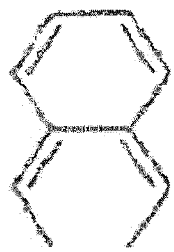

(8)

où une partie d'ouverture de chacun des cycles A, B, C et D est liée à une structure de squelette pour former un cycle aromatique].

**18.** Feuille d'écrantage vis-à-vis d'un rayon thermique selon l'une quelconque des revendications 9 à 17, la feuille d'écrantage vis-à-vis d'un rayon thermique comprenant en outre une couche réfléchissante ayant une propriété de transmission d'onde radio et configurée pour réfléchir la lumière d'au moins une longueur d'onde dans une région de longueurs d'onde de 780 à 2 000 nm.

**19.** Feuille d'écrantage vis-à-vis d'un rayon thermique selon la revendication 18, où la couche réfléchissante est au moins l'une choisie dans le groupe constitué par au moins une couche à cristaux liquides cholestériques, une multicouche diélectrique, et une multicouche de biréfringence.

20. Feuille d'écrantage vis-à-vis d'un rayon thermique selon la revendication 19, où la couche réfléchissante est l'au moins une couche à cristaux liquides cholestériques.

21. Feuille d'écrantage vis-à-vis d'un rayon thermique selon l'une quelconque des revendications 1 à 20, où le liant de résine est un produit durci d'une résine thermodurcissable ou durcissable à la lumière ou est une résine thermoplastique.

FIG.1

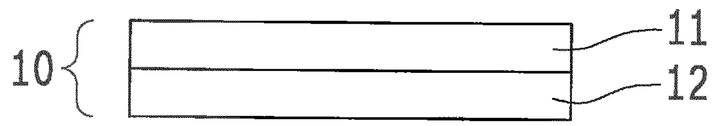


FIG.2

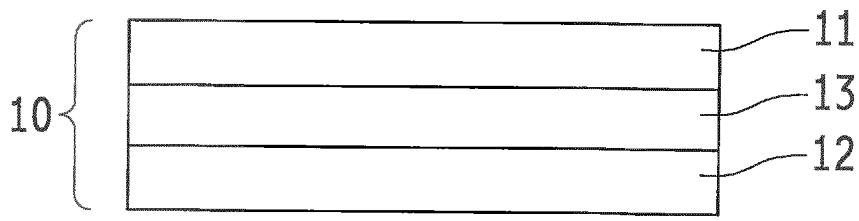

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10008010 B
- JP 2012126037 A
- JP H0570178 B
- JP 2002131531 A
- WO 2000111548 A
- JP 2006219662 A
- US 2006154049 A
- US 2008102282 A
- US 2004234778 A
- US 2005163999 A
- US 6221945 B
- JP H06227815 B
- JP H02105875 B
- JP H06234522 B
- WO 2010143619 A
- WO 2010013455 A
- JP 2507786 B
- JP 3813750 B
- JP 3397824 B
- US 4683327 A
- US 5622648 A
- US 5770107 A
- WO 9522586 A
- WO 9524455 A
- WO 9700600 A
- WO 9823580 A
- WO 9852905 A
- JP H01272551 B
- JP H0616616 B
- JP H07110469 B
- JP H1180081 B
- JP 2001328973 A
- JP 2003287623 A
- JP 2008528313 W


### Non-patent literature cited in the description


- **Y. GOTO et al.** *Mol. Cryst. Liq. Cryst.,* 1995, vol. 260, 23-28
- Makromol. Chem. 1989, vol. 190, 2255
- Advanced Materials. 1993, vol. 5, 107
- Chiral Agents for TN and STN. Ekisho Device Handbook. 142nd Committee of Japan Society for the Promotion of Science, 1989, 199